# EUROPEAN PATENT SPECIFICATION

(11) **EP 3 765 877 B1**
(45) Date of publication and mention of the grant of the patent: **28.02.2024**
(21) Application number: 19714012.2
(22) Date of filing: 14.03.2019
(51) Int. Cl.: G02B 5/30, G02B 27/42, G02B 27/01

(54) **IMPROVING IMAGE QUALITY OF PANCHARATNAM BERRY PHASE COMPONENTS USING POLARIZERS**
VERBESSERUNG DER BILDQUALITÄT VON PANCHARATNAM-BERRY-PHASENKOMPONENTEN UNTER VERWENDUNG VON POLARISATOREN
AMÉLIORATION DE LA QUALITÉ D'IMAGE DE COMPOSANTS DE PHASE DE BAIES DE PANCHARATNAM À L'AIDE DE POLARISEURS

(30) Priority: 15.03.2018 US 201862643691 P; 12.06.2018 US 201816006706
(43) Date of publication of application: 20.01.2021
(73) Proprietor: Meta Platforms Technologies, LLC, Menlo Park, CA 94025 (US)
(72) Inventor: LAM, Wai Sze Tiffany, Menlo Park, California 94025 (US); LU, Lu, Menlo Park, California 94025 (US)
(74) Representative: Murgitroyd & Company
(86) International application number: PCT/US2019/022334
(87) International publication number: WO 2019/178398

(56) References cited:
- EP-A1- 3 351 978
- WO-A1-2016/154537
- WO-A1-2018/231784
- WO-A2-2011/014743
- TAO ZHAN ET AL: "High-resolution additive light field near-eye display by switchable Pancharatnam-Berry phase lenses", OPTICS EXPRESS, vol. 26, no. 4, 15 February 2018 (2018-02-15), page 4863, XP055590399, DOI: 10.1364/OE.26.004863

## Description

### RELATED APPLICATIONS

This application claims priority benefit of the United States Provisional Patent Application titled, "Computer Generated Reality," filed on March 15, 2018 and having Serial No. 62/643,691, and claims priority benefit of the United States Patent Application titled, "Improving Image Quality of Pancharatnam Berry Phase Components Using Polarizers," filed on June 12, 2018 and having Serial No. 16/006,706.

### BACKGROUND

### Field of the Various Embodiments

Embodiments of this disclosure relate generally to near eye displays and, more specifically, to the use of polarizers to improve optical performance of Pancharatnam Berry Phase components.

### Description of the Related Art

Pancharatnam Berry Phase (PBP) or geometric phase components can be used in an optical assembly of a head-mounted display (HMD) that may be part of, for example, a virtual reality (VR) system, an augmented reality (AR) system, a mixed reality (MR) system, or some combination thereof. The PBP components can be made by liquid crystal (LC) or meta material. The PBP components can be implemented as PBP gratings and/or PBP lenses. Both types of PBP components, however, operate with a dependency on wavelength. For example, the diffraction angle or the focus distance of a PBP component varies based upon the wavelength of light. Such a feature may reduce image quality of optical systems that employ PBP components and a light source that emits light of multiple wavelengths or color channels.

WO 2011/014743 A2 describes a beam steering apparatus including a first beam steering stage and at least a second beam steering stage arranged in-line with the first beam steering stage. The first beam steering stage includes a first polarization grating comprising a uniaxial birefringent material having a first periodic director pattern, and the second beam steering stage includes a second polarization grating comprising a uniaxial birefringent material having a second periodic director pattern. In non-mechanical embodiments, a polarization selector is arranged to provide a circularly polarized input beam incident on the first polarization grating.

WO 2016/154537 A1 describes an optical magnification system comprising two Pancharatnam lenses, and provides a first magnification for left-hand circularly polarized light and a second magnification different from the first magnification for right-hand circularly polarized light. Also described is an optical magnification system comprising two lenses, each having different focal lengths for left-handed and right-handed circularly polarized light, respectively, and configured to provide a first magnification for left-handed circularly polarized light and a second magnification different from the first magnification for right-handed circularly polarized light

EP 3 351 978 A1 describes a display apparatus and an electronic apparatus that includes the display apparatus. The display apparatus includes an optical system that transfers a first image and a second image to an ocular organ of a user. The optical system includes at least two polarization-dependent lenses (LN11, LN21). Each of the two polarization-dependent lenses (LN11, LN21) have a focal length that varies based on a polarization state of incident light. The two polarization-dependent lenses (LN11, LN21) have optically different characteristics with respect to the first and second images (L11, L21). The display apparatus further includes at least one wave plate (WP11, WP21) and/or at least one polarizer (LP11, PT11) provided between the two polarization-dependent lenses (LN11, LN21) or outside thereof.

WO 2018/231784 A1 describes an augmented reality system including at least one waveguide configured to receive and redirect light toward a user, and to allow ambient light to pass toward the user. A first adaptive lens assembly is positioned between the waveguide and the environment, a second adaptive lens assembly is positioned between the waveguide and the user, and at least one processor is operatively coupled to the first and second adaptive lens assemblies. Each lens assembly is selectively switchable between at least two different states in which the respective lens assembly is configured to impart at least two different optical powers to light passing there through, respectively. The processor is configured to cause the first and second adaptive lens assemblies to synchronously switch between different states in a manner such that the first and second adaptive lens assemblies impart a substantially constant net optical power to ambient light from the environment.

### SUMMARY

Various embodiments set forth a near eye display (NED) that includes an electronic display configured to output image light. Further, the NED includes one or more PBP optical elements that are combined with one or more polarizers to improve optical performance. In some examples, the optical element may be configured for beam steering (e.g. via diffraction). In other examples, the optical element may be configured to be a lens.

Generally, a PBP element produces an output of three diffraction orders. In an optical system that includes such a PBP element, one of the three diffraction orders is used while the other two may be undesirable and maintained at a relatively low intensity (ideally, an intensity of zero). A non-zero intensity of these undesired diffraction orders may lead to ghost images and other effects that degrade image qualities of the optical system. PBPelements operate with a relatively strong dependency on wavelength. Thus, if a particular PBPelement is designed to operate for a specific wavelength of light, then the PBPelement will not operate as effectively on other wavelengths of light. For example, the PBPelement may produce relatively high intensities of the two undesired diffraction orders. A circular polarizer may reduce the intensities of the two undesired diffraction orders.

One advantage of techniques disclosed herein is that a PBP element may be used to operate on multiple wavelengths or color channels with reduced degradation in optical performance.

Embodiments according to the invention are disclosed in the attached claims directed to an optical system, and a head-mounted display (HMD).

In a first aspect, an optical system comprises:
a geometric phase element configured to produce a first light beam associated with a first diffraction order and a second light beam associated with a second diffraction order in response to receiving input light; and
a first elliptical polarizer configured to reduce an intensity of the first light beam and substantially preserve an intensity of the second light beam;
characterized in that the optical system further comprises:
   a second elliptical polarizer; and
   a depolarizer configured to provide unpolarized light to the second elliptical polarizer.

The elliptical polarizer may comprise a circular polarizer having a first handedness and the second elliptical polarizer may comprise a circular polarizer having a second handedness that is opposite to the first handedness.

The geometric phase element may be configured to produce a third light beam associated with a third diffraction order, and the elliptical polarizer may be configured to reduce an intensity of the third light beam.

The geometric phase element may comprise a switchable Pancharatnam Berry Phase (PBP) lens.

The geometric phase element may comprise a stack of two or more Pancharatnam Berry Phase (PBP) lenses.

In an embodiment, an optical system may comprise a traditional lens to provide the input light to the geometric phase element.

The geometric phase element may comprise a first stack that includes a first PBP lens having a first optical power and a second PBP lens having a second optical power, the optical system may comprise:
a lightguide configured to provide image light to the elliptical polarizer; and
a second stack of PBP lenses comprising a third PBP lens having an optical power that is a conjugate of the first optical power and a fourth PBP lens having an optical power that is a conjugate of the second optical power.

At least one of the first, second, third, and fourth PBP lenses may comprise a switchable PBP lens to provide a switchable image plane.

In an embodiment, an optical system may comprise a plurality of electrically switchable PBP liquid crystal half-wave plates, each of the plurality of electrically switchable PBP liquid crystal half-wave plates may be adjacent to a different one of the first, second, third, and fourth PBP lenses, the plurality of electrically switchable PBP liquid crystal half-wave plates and the first, second, third, and fourth PBP lenses may be configured to provide a switchable image plane.

In an embodiment, an optical system may comprise a liquid crystal display device to provide the image light to the lightguide.

The optical system may be included in an augmented reality head mounted device.

In an embodiment, an optical system may comprise:
a first quarter-wave plate and a second quarter-wave plate adjacent to the geometric phase element; and
a linear polarizer between the first and the second quarter-wave plate.

The geometric phase element may comprise a Pancharatnam Berry Phase (PBP) grating.

In a second aspect, a head-mounted display (HMD) comprises:
an electronic display configured to emit image light;
a first stack of Pancharatnam Berry Phase (PBP) geometric phase elements configured to produce a first light beam associated with a first diffraction order and a second light beam associated with a second diffraction order in response to the image light; and
a first elliptical polarizer configured to reduce an intensity of the first light beam and substantially preserve an intensity of the second light beam;
characterized in that the HMD further comprises:
   a second elliptical polarizer; and
   a depolarizer configured to provide unpolarized light to the second elliptical polarizer.

In an embodiment, a head-mounted display (HMD) may comprise:
a second stack of PBP geometric phase element configured to produce output light; and
a lightguide between the first and the second stack of PBP geometric phase elements, the lightguide configured to provide the image light to the first stack of PBP geometric phase elements and to transmit the output light produced by the second stack of PBP geometric phase elements.

The first stack of PBP geometric phase elements may include a first PBP lens having a first optical power and a second PBP lens having a second optical power, and the second stack of PBP geometric phase elements may include a third PBP lens having an optical power that is opposite to the first optical power and a fourth PBP lens having an optical power that is opposite to the second optical power.

In an embodiment, a head-mounted display (HMD) may comprise electrically switchable PBP liquid crystal half-wave plates respectively adjacent to the first, second, third, and fourth PBP lenses, the electrically switchable PBP liquid crystal half-wave plates and the first, second, third, and fourth PBP lenses to provide a switchable image plane.

Also described is a head-mounted display (HMD) comprising:
an electronic display configured to emit image light;
a first elliptical polarizer configured to produce elliptically polarized light based on the image light;
a geometric phase element configured to produce a first light beam associated with a first diffraction order and a second light beam associated with a second diffraction order in response to receiving elliptically polarized light; and
a second elliptical polarizer configured to reduce an intensity of the first light beam and substantially preserve an intensity of the second light beam.

Also described is one or more computer-readable non-transitory storage media embody software that is operable when executed to perform in a system according to the invention or any of the above mentioned embodiments.

Also described is a computer-implemented method that uses a system according to the invention or any of the above mentioned embodiments.

Also described is a computer program product, preferably comprising a computer-readable non-transitory storage media, that is used in a system according to the invention or any of the above mentioned embodiments.

### BRIEF DESCRIPTION OF THE DRAWINGS

So that the manner in which the above recited features of the various embodiments can be understood in detail, a more particular description of the disclosed concepts, briefly summarized above, may be had by reference to various examples, some of which are illustrated in the appended drawings. It is to be noted, however, that the appended drawings illustrate only typical examples of the disclosed concepts and are therefore not to be considered limiting of scope in any way, and that there are other equally effective examples.
FIG. 1A is a diagram of a near eye display (NED).
FIG. 1B is a cross section of the front rigid body of the NED illustrated in FIG. 1A.
FIG. 2A is a diagram of an HMD implemented as a near eye display.
FIG. 2B is a cross-section view of an HMD of FIG. 2A implemented as a near eye display.
FIG. 3A illustrates an example of a PBP grating.
FIG. 3B illustrates an example of a PBP lens.
FIG. 4 includes three graphs that illustrate relative intensities of different diffraction orders as a function of phase for light transmitting through a PBP lens.
FIG. 5 illustrates optical paths of different diffraction orders for a PBP lens for different wavelengths of light.
FIG. 6 illustrates the effect of circular polarizers on diffraction orders for a PBP lens.
FIG. 7 illustrates an example application of an optical system that enables switchable optical power and incorporates circular polarizers and PBP lenses.
FIG. 8 illustrates the handedness of circularly polarized light for an optical system that enables switchable optical power and incorporates circular polarizers and PBP lenses.
FIG. 9 illustrates the handedness of circularly and linearly polarized light for a quarter-wave plate between two linear polarizers.
FIG. 10 illustrates the handedness of circularly polarized light for an optical system that incorporates circular polarizers, a quarter-wave plate, linear polarizers, and PBP lenses.
FIG. 11 illustrates a block diagram of an optical system that includes an image source and a lightguide.
FIG. 12 illustrates an example application of an optical system that enables switchable optical power and incorporates circular polarizers and PBP lenses.
FIG. 13 illustrates the handedness of circularly polarized light for an optical system that enables switchable optical power and incorporates circular polarizers and PBP lenses.
FIG. 14 illustrates the handedness of circularly polarized light for an optical system that enables switchable optical power and incorporates circular polarizers and PBP lenses.
FIG. 15 is a block diagram of a NED system in which a console operates.

### DETAILED DESCRIPTION

In the following description, numerous specific details are set forth to provide a more thorough understanding of the various examples. However, it is apparent to one of skilled in the art that the disclosed concepts may be practiced without one or more of these specific details.

### Configuration Overview

One or more embodiments disclosed herein relate to the configuration of a Pancharatnam Berry Phase (PBP) structure comprising a plurality of PBP elements and at least one circular polarizer. A PBP element, also referred to as a geometric phase element, may comprise an active liquid crystal or a liquid crystal polymer placed using photo-alignment technology, for example. In some configurations, a PBP element may comprise meta material with meta structure configured to produce geometric phase. PBP elements can achieve multiple or varying focal lengths when designed as a lens or multiple steering angles when designed as a steering element (also referred to as a "grating"). In some examples, the PBP element may be used for static or active operation of a display device.

In some examples, an optical system including PBP elements may be configured to receive light along an optical axis from a pixelated light valve (e.g., an electronic display such as an LCD display). The pixelated light valve may be illuminated by a light source that may produce at least partially coherent light. In some examples, the system may be configured to operate with multiple color channels (e.g., three) for different portions of the visible spectrum (e.g., red, green, and blue color channels). In such a case, an electronic display may be configured to emit image light that includes the multiple color channels. In some examples, an optical system may include an achromatic or apochromatic PBP lens stack configured to focus light of different color channels to a single common focal point. Such an achromatic or apochromatic PBP lens stack may include three PBP elements and two color-selective wave plates for three-color channels. A color-selective filter is a multilayer birefringent film that behaves as a half-wave plate for one color channel and a full-wave plate for other color channels. Herein, an achromatic or apochromatic optical system generally refers to a system having one or more optical elements that at least partially correct for chromatic aberration of an image formed by the system.

Generally, a PBP element produces an output of three diffraction orders. Typically in an optical system that includes such a PBP element, one of the three diffraction orders is used while the other two may be undesirable and maintained at a relatively low intensity (ideally, an intensity of zero). A non-zero intensity of these undesired diffraction orders may lead to light leakage, ghosts, and other effects that degrade image qualities of the optical system. PBP elements operate with a dependency on wavelength. Thus, if a particular PBP element is designed to operate for a specific wavelength of light, then the PBP element will not operate properly on other wavelengths of light. For example, the PBP element may produce relatively high intensities of the two undesired diffraction orders. Adding one or more circular polarizers to the optical system may reduce the intensities of the two undesired diffraction orders.

In one example, a left circular polarizer and a right circular polarizer placed on either end of a stack of PBP elements may block light leakage and help prevent ghosts. In another example with multiple PBP elements, quarter-wave plates and linear polarizers may be arranged a as back-to-back circular polarizer and placed between two PBP elements to reduce the leakage of light. The result of this system may improve image quality and reduce ghosts

For ease of discussion, the following description involves three color channels, each having a representative (e.g., central) wavelength. A color channel, however, may comprise a continuous spectrum of wavelengths. To simplify descriptions herein, the precise effect of the PBP lenses operating as wave plates on such a continuous spectrum is heuristically ignored and, instead, a representative wavelength within the associated color channel is considered. For example, the red color channel may be represented by wavelength of 630 nanometers, the green color channel may be represented by wavelength of 520 nanometers, and the blue color channel may be represented by wavelength of 450 nanometers, though claimed subject matter is not so limited.

Embodiments of the disclosure may include or be implemented in conjunction with an artificial reality system. Artificial reality is a form of reality that has been adjusted in some manner before presentation to a user, which may include, for example, a virtual reality (VR) system, an augmented reality (AR) system, a mixed reality (MR) system, a hybrid reality system, or some combination and/or derivatives thereof. Artificial reality content may include, without limitation, completely generated content or generated content combined with captured (e.g., real-world) content. The artificial reality content may include, without limitation, video, audio, haptic feedback, or some combination thereof. The artificial reality content may be presented in a single channel or in multiple channels (such as stereo video that produces a three-dimensional effect to the viewer). Additionally, in some embodiments, artificial reality systems may also be associated with applications, products, accessories, services, or some combination thereof, that are used to, e.g., create content in an artificial reality system and/or are otherwise used in (e.g., perform activities in) an artificial reality system. The artificial reality system may be implemented on various platforms, including a head-mounted display (HMD) connected to a host computer system, a standalone HMD, a mobile device or computing system, or any other hardware platform capable of providing artificial reality content to one or more viewers.

### System Overview

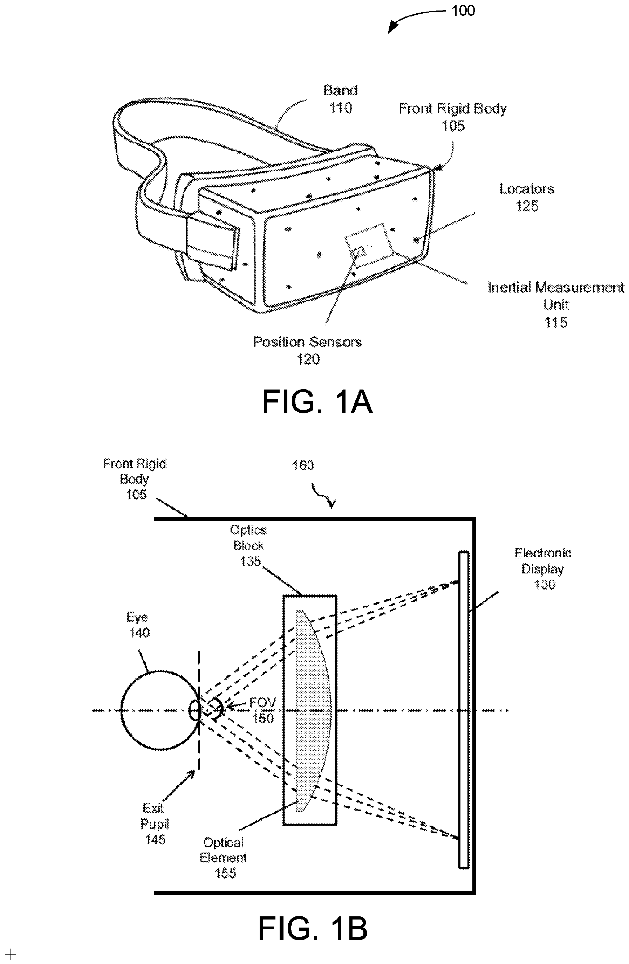

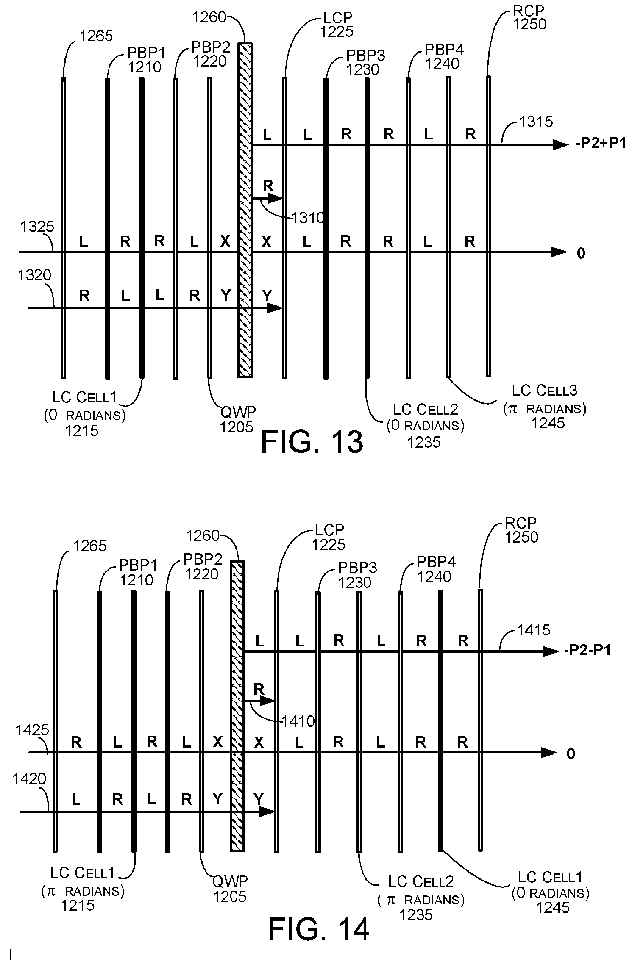

FIG. 1A is a wire diagram of a near eye display (NED) 100. NED 100 includes a front rigid body 105 and a band 110. Front rigid body 105 includes one or more electronic display elements of an electronic display (not shown), an inertial measurement unit (IMU) 115, one or more position sensors 120, and locators 125. In the example illustrated in FIG. 1A, position sensors 120 are located within IMU 115, and neither IMU 115 nor position sensors 120 are visible to the user. IMU 115, position sensors 120, and locators 125 are discussed in detail below with regard to FIG. 13. In various examples, where NED 100 acts as an AR or MR device, portions of NED 100 and/or its internal components are at least partially transparent.

FIG. 1B is a cross section 160 of front rigid body 105 of the NED 100 illustrated in FIG. 1. Front rigid body 105 includes an electronic display 130 and an optics block 135 that together provide image light to an exit pupil 145. Exit pupil 145 is the location of the front rigid body 105 where a user's eye 140 may be positioned. For purposes of illustration, FIG. 1B illustrates a cross section 160 associated with a single eye 140, but another optics block, separate from optics block 135, may provide altered image light to another eye of the user. Additionally, NED 100 includes an eye tracking system (not shown in FIG. 1B). The eye tracking system may include one or more sources that illuminate one or both eyes of the user. The eye tracking system may also include one or more cameras that capture images of one or both eyes of the user to track the positions of the eyes.

Electronic display 130 displays images to the user. In various examples, electronic display 130 may comprise a single electronic display or multiple electronic displays (e.g., a display for each eye of a user). Examples of electronic display 130 include: a liquid crystal display (LCD), an organic light emitting diode (OLED) display, an active-matrix organic light-emitting diode display (AMOLED), a QOLED, a QLED, some other display, or some combination thereof.

Optics block 135 adjusts an orientation of image light emitted from electronic display 130 such that electronic display 130 appears at particular virtual image distances from the user. Optics block 135 is configured to receive image light emitted from electronic display 130 and direct the image light to an eye-box associated with exit pupil 145. The image light directed to the eye-box forms an image at a retina of eye 140. The eye-box is a region defining how much eye 140 moves up/down/left/right from without significant degradation in the image quality. In the illustration of FIG. 1B, a field of view (FOV) 150 is the extent of the observable world that is seen by eye 140 at any given moment.

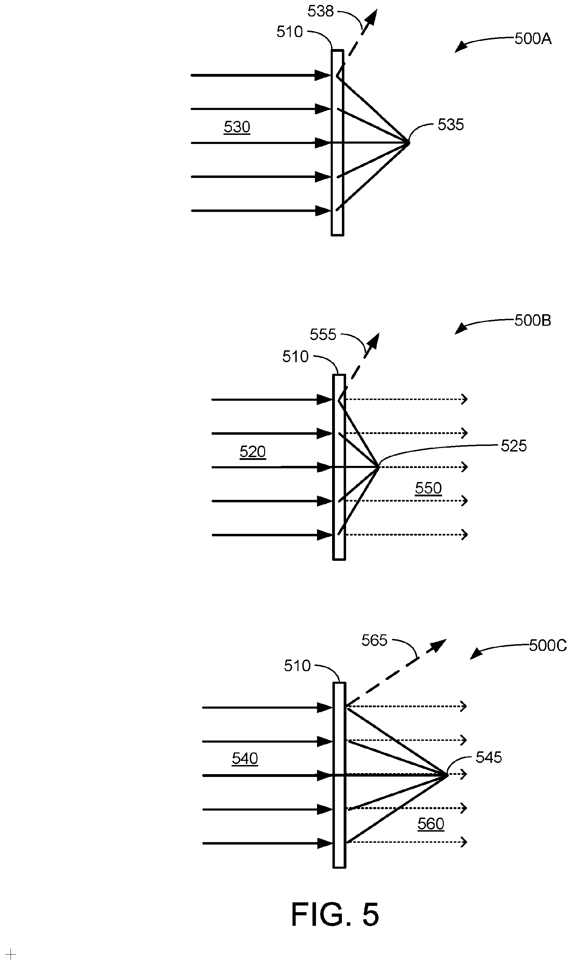

Additionally, in some examples, optics block 135 magnifies received light, corrects optical errors associated with the image light, and presents the corrected image light to eye 140. Optics block 135 may include one or more optical elements 155 in optical series. An optical element 155 may be an aperture, a Fresnel lens, a convex lens, a concave lens, a filter, a waveguide, a PBP lens or grating, a color-selective filter, a waveplate, a C-plate, or any other suitable optical element 155 that affects the image light. Moreover, optics block 135 may include combinations of different optical elements. In some examples, one or more of the optical elements in optics block 135 may have one or more coatings, such as anti-reflective coatings. Optics block 135 may include components that are discussed in detail in conjunction with Figures 5-15.

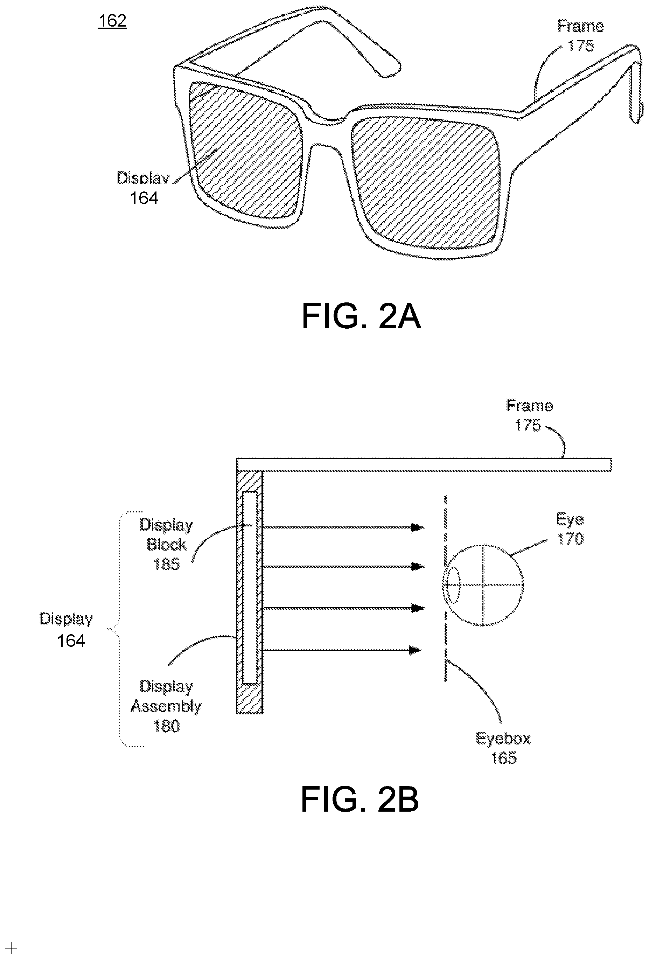

FIG. 2A is a diagram of an HMD 162 implemented as a near eye display. In this example, HMD 162 is in the form of a pair of augmented reality glasses. HMD 162 presents computer-generated media to a user and augments views of a physical, real-world environment with the computer-generated media. Examples of computer-generated media presented by HMD 162 include one or more images, video, audio, or some combination thereof. In some examples, audio is presented via an external device (e.g. speakers and headphones) that receives audio information from HMD 162, a console (not shown), or both, and presents audio data based on audio information. In some examples, HMD 162 may be modified to also operate as a virtual reality (VR) HMD, a mixed reality (MR) HMD, or some combination thereof. HMD 162 includes a frame 175 and a display 164. In this example, frame 175 mounts the near eye display to the user's head, while display 164 provides image light to the user. Display 164 may be customized to a variety of shapes and sizes to conform to different styles of eyeglass frames.

FIG. 2B is a cross-section view of the HMD of FIG. 2A implemented as a near eye display. FIG. 2B shows a cross-section view of HMD 162 implemented as a near eye display. This view includes frame 175, display 164 (which comprises a display assembly 180 and a display block 185), and eye 170. The display assembly 180 supplies image light to eye 170. Display assembly 180 houses display block 185, which, in different examples, encloses the different types of imaging optics and redirection structures. For purposes of illustration, FIG. 2B shows the cross section associated with a single display block 185 and a single eye 170, but in alternative examples not shown, another display block, which is separate from display block 185 shown in FIG. 2B, provides image light to another eye of the user.

Display block 185, as illustrated, is configured to combine light from a local area with light from computer generated image to form an augmented scene. Display block 185 is also configured to provide the augmented scene to eyebox 165 corresponding to a location of a user's eye 170. Display block 185 may include, for example, a waveguide display, a focusing assembly, a compensation assembly, or some combination thereof. As described below for some examples, PBP LC structures may be placed on one or both sides of display block 185 to affect various parameters (e.g., focal length, optical power, image quality, and so on) of the optical system.

HMD 162 may include one or more other optical elements between display block 185 and eye 170. The optical elements may act to, for example, correct aberrations in image light emitted from display block 185, magnify image light emitted from display block 185, some other optical adjustment of image light emitted from display block 185, or some combination thereof. The example for optical elements may include an aperture, a Fresnel lens, a convex lens, a concave lens, a filter, or any other suitable optical element that affects image light. Display block 185 may comprise one or more materials (e.g., plastic, glass, etc.) with one or more refractive indices that effectively minimize the weight and widen a field of view of HMD 162. In some examples, one or more components of display block 185 are implemented as a PBP structure having a stack of PBP plates, which are described in greater detail below.

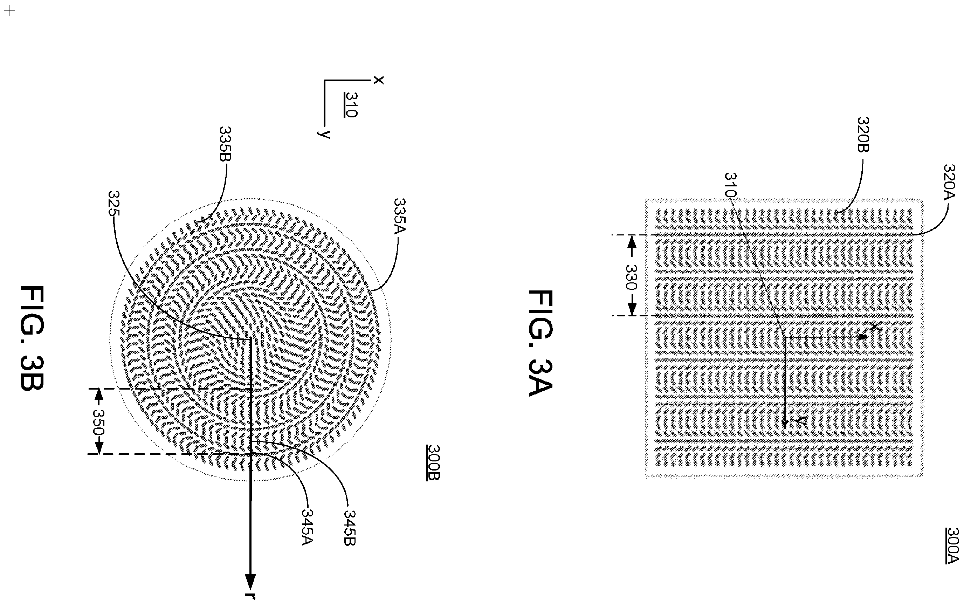

FIG. 3A illustrates a PBP grating 300. Mutually orthogonal x and y-axes 310 are illustrated for reference. The z-axis, not illustrated, is perpendicular to the x-y plane and along an optical axis of grating 300.

Grating 300 includes uniaxial fast axis 320 of liquid crystal or meta structure that are oriented in a linearly repetitive pattern. In FIG. 3A, the orientation of the fast axis are illustrated as short line segments aligned so as to schematically represent orientations of the liquid crystals or the meta structure. For example, fast axis 320A is oriented in the x-direction while liquid crystal 320B is oriented in the y-direction. Fast axis between 320A and 320B are aligned along directions intermediate to the x and y-directions. The uniaxial waveplate having such a patterned orientation give rise to a geometric-phase shift of light as a consequence of polarization evolution as light waves of the light propagate through the waveplate (e.g., phase plate). In various examples, orientations of the fast axis along the x-axis are constant for a particular x-y plane of grating 300. Further, though not illustrated, in various examples, orientations of the fast axis in a direction perpendicular to the x-y plane (the z-axis) may vary in a rotational fashion (e.g., a twisted structure).

The linearly repetitive pattern of grating 300 has a pitch that is half the distance 330 along the y-axis between repeated portions of the pattern. The pitch determines, in part, the optical properties of grating 300. For example, polarized light incident along the optical axis on grating 300 results in a grating output comprising primary, conjugate, and leakage light respectively corresponding to diffraction orders m = +1, -1, and zero. Although m = +1 is herein considered to be the primary order and the conjugate order is considered to be the m = -1 order, the designation of the orders could be reversed or otherwise changed. The pitch determines the diffraction angles (e.g., beam-steering angles) of the light in the different diffraction orders. Generally, the smaller the pitch, the larger the angles for a given wavelength of light.

FIG. 3B is a top view of an example PBP lens 300B. Mutually orthogonal x and y-axes 310 are illustrated for reference. The z-axis, not illustrated, is perpendicular to the x-y plane and along an optical axis of lens 300B. An r-axis, in the x-y plane, represents a radial direction and distance from the center 325 of lens 300B.

Lens 300B includes fast axis 335 that are oriented in a radially and circumferentially repetitive pattern. In the figure, the liquid crystals or the meta structures are illustrated as short line segments aligned so as to schematically represent orientations of the fast axis. For example, for a fixed distance from the optical axis, fast axis 335A is oriented in a circumferential direction while fast axis 335B is oriented in a radial direction. fast axes between 335A and 335B are aligned along directions intermediate to circumferential and radial directions. As another example, along a fixed radial direction, fast axis 345A is oriented in a circumferential direction while fast axis 345B is oriented in a radial direction. Fast axes between 345A and 345B are aligned along directions intermediate to circumferential and radial directions. The uniaxial fast axes of the liquid crystals or meta structures having such a patterned orientation give rise to a geometric-phase shift of light as a consequence of polarization evolution as light waves of the light propagate through the geometric phase plate. Though not illustrated, orientations of the fast axis in a direction perpendicular to the x-y plane (the z-axis) may vary in a rotational fashion (e.g., a twisted structure).

The radially repetitive pattern of lens 300B has a pitch 350, which is the distance along the r-axis between repeated portions of the pattern. Generally, pitch 350 may vary in a radial direction. For example, the distance along the r-axis between repeated portions of the pattern may decrease as r increases. Thus, pitch 350 may be larger closer toward center 325. The pitch determines, in part, the optical properties of lens 300B. For example, polarized light incident along the optical axis on lens 300B results in a lens output of light having a particular focal length for a particular wavelength of light. The pitch determines such a focal length. Generally, the smaller the pitch, the smaller the focal length for a given wavelength of light.

Classically, a wavefront of light is controlled by adjusting optical path length (OPL), defined for an isotropic material as the product of the speed of the wave (dependent on the material's refractive index) and the physical propagation distance of the wave through the material. For a classical lens, the spatially varying OPL caused by a curved surface of a lens results in a phase shift of the wavefront giving rise to a focal length of the lens. A geometric-phase shift of a PBP lens, in contrast, arises from the evolution of lightwaves through the anisotropic volume of the PBP lens. The phase shift depends on the geometry of the pathway of the individual lightwaves through the anisotropy, which transforms the lightwaves. For example, molecular anisotropy of liquid crystals and nanostructures of meta materials in the PBP lens lead to a phase shift of transmitted or reflected lightwaves. Such a phase shift is directly proportional to the orientation of an effective optic axis and the fast axis orientation of the anisotropic material.

In some examples, PBP lenses, such as PBP lens 300B may be active (also referred to as an "active element") or passive (also referred to as a "passive element"). An active PBP lens, for example, has three optical states: an additive state, a neutral state, and a subtractive state. The additive state adds optical power to the system, the neutral state does not affect the optical power of the system and does not affect the polarization of light passing through the active PBP lens, and the subtractive state subtracts optical power from the system.

The state of an active PBP lens is determined by the handedness of polarization of light incident on the active PBP lens and a measure of the voltage applied to the active PBP lens made of liquid crystal. For example, an active PBP LC lens operates in a subtractive state responsive to incident light with a right-handed circular polarization and an applied voltage of zero (or more generally, below a threshold voltage value). In some examples, an active PBP LC lens operates in an additive state responsive to incident light with a left-handed circular polarization, and an applied voltage of zero. In some examples, an active PBP LC lens operates in a neutral state (regardless of polarization) responsive to an applied voltage larger than a threshold voltage. An applied voltage larger than the threshold voltage aligns liquid crystals with a positive dielectric anisotropy along the electric field direction associated with the applied voltage. If the active PBP LC lens is in the additive or subtractive state, then light output from the active PBP LC lens has a handedness that is opposite of the handedness of light input into the active PBP LC lens. In contrast, if the active PBP LC lens is in the neutral state, then light output from the active PBP LC lens has the same handedness as the light input into the active PBP LC lens.

A passive PBP lens has two optical states: an additive state and a subtractive state. The state of a passive PBP lens is determined by the handedness of polarization of light incident on the passive PBP lens. In general, the passive PBP lens outputs light that has a handedness that is opposite of the light input into the passive PBP lens. For example, a passive PBP lens operates in a subtractive state responsive to incident light with a right handed polarization and operates in an additive state responsive to incident light with a left handed polarization.

In some examples, a PBP grating, such as 300, may be active (also referred to as an "active element") or passive (also referred to as a "passive element"). An active PBP grating, for example, has three optical states, similar to that of an active PBP lens: an additive state, a neutral state, and a subtractive state. In an additive state, the active PBP grating diffracts light of a particular wavelength to an angle that is positive relative to the diffraction angle of the subtractive state. In the subtractive state, the active PBP grating diffracts light at a particular wavelength to an angle that is negative relative to the positive angle of the additive state. On the other hand, in the neutral state, the PBP grating does not lead to a diffraction of light and does not affect the polarization of light passing through the active PBP grating.

The state of an active PBP grating is determined by a handedness of polarization of light incident on the active PBP grating and a measure of the voltage applied to the active PBP grating. For example, an active PBP grating operates in a subtractive state responsive to incident light with a right-handed circular polarization and an applied voltage of zero (or, more generally, below a threshold voltage value). In some examples, the PBP grating operates in an additive state responsive to incident light with a left-handed circular polarization and an applied voltage of zero. In some examples, the PBP grating and operates in a neutral state (regardless of polarization) responsive to an applied voltage larger than a threshold voltage. An applied voltage larger than the threshold voltage aligns liquid crystals with positive dielectric anisotropy along the electric field direction associated with the applied voltage. If the active PBP grating is in the additive or subtractive state, then light output from the active PBP grating has a handedness that is opposite the handedness of light input into the active PBP grating. If the active PBP grating is in the neutral state, then light output from the active PBP grating has the same handedness as the light input into the active PBP grating.

The state of a passive PBP grating is determined by a handedness of polarization of light incident on the passive PBP grating. For example, a passive PBP grating operates in a subtractive state responsive to incident light with a right-handed circular polarization. In some examples, the passive PBP grating operates in an additive state responsive to incident light with a left-handed circular polarization. For the passive PBP grating in the additive or subtractive state, light output from the passive PBP grating has a handedness that is opposite the handedness of light input into the passive PBP grating.

### Reducing Image Artifacts and Ghosts in PBP Configurations

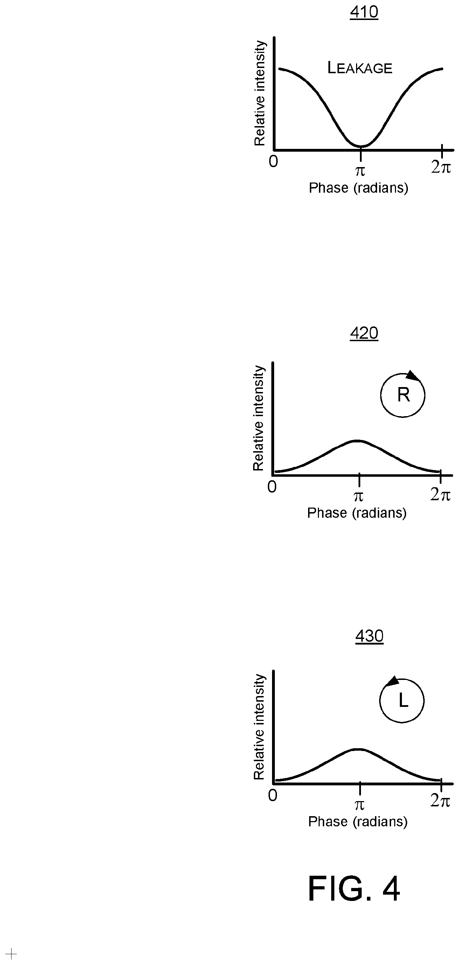

FIG. 4 includes three graphs 410, 420, and 430 that illustrate relative intensities of different diffraction orders as a function of phase for light transmitting through a PBP lens. For example, a PBP lens, such as 300, produces light corresponding to three diffraction orders. In one example, PBP lens produces primary light, conjugate light, and leakage light corresponding to diffraction orders m = +1, -1, and zero, respectively. In some discussions herein, the conjugate order of PBP lenses is the order for which an optical system is designed, while the primary order and leakage order are considered to be undesirable and may lead to image artifacts and ghosts. Thus, reducing the primary and leakage orders may lead to improved quality of images produced by the optical system that incorporates the PBP lens. In other discussions herein, the primary order of PBP lenses is the order for which an optical system is designed, while the conjugate order and leakage order are considered to be undesirable and may lead to image artifacts and ghosts. Thus, reducing the conjugate and leakage orders may lead to improved quality of images produced by the optical system that incorporates the PBP lens.

Graph 410 illustrates the intensity of leakage light as a function of phase (e.g., birefringent magnitude) imposed on light incident on (and travelling through) the PBP lens. For unpolarized incident light, leakage light remains substantially unpolarized subsequent to travelling through the PBP lens. The leakage light is relatively minimal (e.g., is at a minimum in graph 410) at a phase of π, which the PBP lens acting as a half-wave plate may impose on the incident light. Accordingly, because leakage light is undesirable, the PBP lens may be configured as a half-wave plate to impose a phase of π to incident light.

Graph 420 illustrates the intensity of the primary order light as a function of phase (e.g., birefringent magnitude) imposed on light incident on (and travelling through) the PBP lens. The primary order light is at a relative maximum at a phase of π, which the PBP lens acting as a half-wave plate may impose on the incident light. Accordingly, the PBP lens may be configured as a half-wave plate to impose a phase of π to incident light. For unpolarized incident light, primary order light becomes substantially polarized to right-handed polarized subsequent to travelling through such a PBP lens.

Graph 430 illustrates the intensity of the conjugate order light as a function of phase (e.g., birefringent magnitude) imposed on light incident on (and travelling through) the PBP lens. Similar to the primary order light, the conjugate order light is at a relative maximum at a phase of π. Such a phase may be produced by a PBP lens that imposes a half-wave birefringence on incident light. For unpolarized incident light, conjugate order light becomes substantially polarized to left-handed polarized subsequent to travelling through the PBP lens.

FIG. 5 illustrates optical paths of different diffraction orders for a PBP lens 510 for light of three different color channels (e.g., wavelengths), as illustrated in examples 500A, 500B, and 500C. For example, PBP lens 510 may focus light of different color channels to different focal points.

As mentioned above, the effect of the periodicity or the distribution of patterned liquid crystals of PBP lens 510 is wavelength dependent. Accordingly, incident light of different color channels (wavelengths) is focused differently by PBP lens 510. As illustrated in FIG. 5, PBP lens 510 receives incident light comprising light of different color channels, each color channel associated with a different wavelength range (e.g., red, green, and blue color channels). Because the location (e.g., focus distance) of a focal point of PBP lens 510 is based on wavelength of incident light 550, the different color channels do not focus in the same focal plane. For example, lens 510 may focus light of a red color channel 520 (or, more precisely, a particular wavelength of the spectral band of the red color channel) at focal point 525. Similarly, lens 510 may focus light of a green color channel 530 (or, more precisely, a particular wavelength of the spectral band of the green color channel) at focal point 535, and may focus light of a blue color channel 540 (or, more precisely, a particular wavelength of the spectral band of the blue color channel) at focal point 545.

In addition to focusing light of different color channels to different convergence (e.g., focal) points, PBP lens 510 may function differently for different wavelengths of light. For example, PBP lens 510 may function optimally for a wavelength of light corresponding to green color channel 530. In other words, PBP lens 510 behaves as a half-wave plate for green color channel 530. In this example, PBP lens 510, upon receiving light of green color channel 530, produces output light comprising a conjugate order and focused at focal point 535, and primary order light 538. In contrast, as illustrated in example 500B, PBP lens 510, upon receiving light of red color channel 520, produces, in addition to output light comprising a conjugate order and focused at focal point 525, leakage light 550 and primary order light 555. The undesired primary order light and leakage light are produced as a result of PBP lens 510 behaving differently from a half-wave plate for light of the red color channel. Similarly, as illustrated in example 500C, PBP lens 510, upon receiving light of blue color channel 540, produces, in addition to output light comprising a conjugate order and focused at focal point 545, leakage light 560 and primary order light 565. As in the case for the red color channel (or light having a wavelength other than that of green light), the undesired primary order light and leakage light are produced as a result of PBP lens 510 behaving differently from a half-wave plate for light of the blue color channel. As a result of such undesired primary order and leakage light, PBP lens 510 operating on multiple color channels may lead to images having a reduced quality, such as images comprising ghosts and chromatic aberration causing the images to be blurred and appear unfocused.

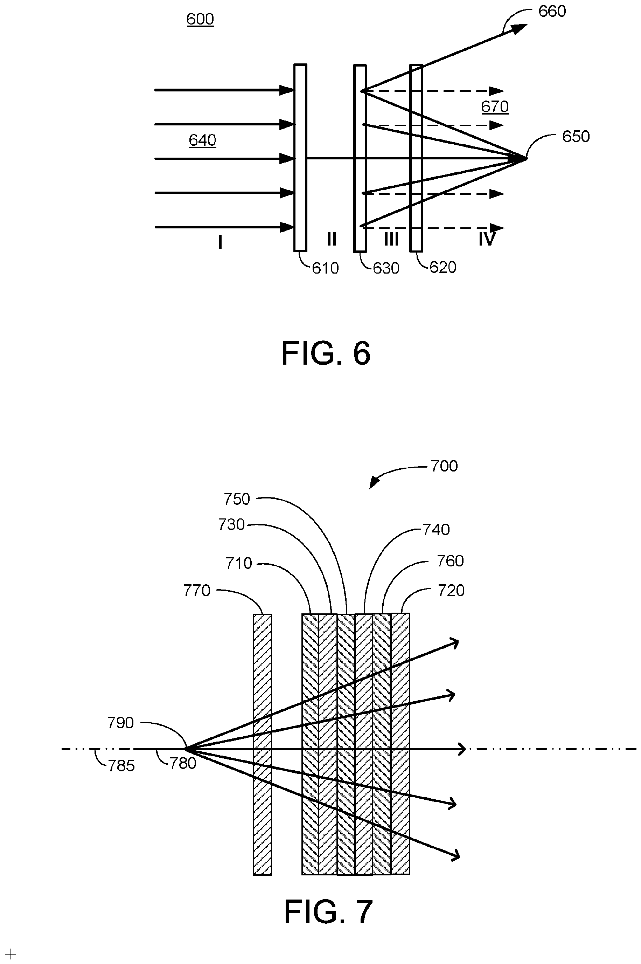

FIG. 6 illustrates a system 600 that includes circular polarizers 610 and 620 and a PBP lens 630. Although examples herein involve PBP lenses (e.g., 630 and others introduced below), embodiments may instead, or in addition to, involve PBP gratings, such as described above regarding FIG. 3A. In other words, optical systems involving PBP gratings and circular polarizers (e.g., 610 and 620) may provide benefits the same as or similar to optical systems involving PBP lenses and circular polarizers, as described herein.

In some examples, circular polarizer 610 need not be included in system 600. In various examples, circular polarizer 610 and/or circular polarizer 620 may be an elliptical polarizer. The behavior of light as it travels through various portions of system 600 is described relative to regions I to IV. For FIG. 6, region I is defined as the region to the left of circular polarizer 610. Region II is defined as the region between circular polarizer 610 and PBP lens 630. Region III is defined as the region between PBP lens 630 and circular polarizer 620. Region IV is defined as the region to the right of circular polarizer 620.

In the illustrated example, in region I, circular polarizer 610 receives incident light 640. Unless specified otherwise, for ease of description, light 640 is assumed to be monochromatic, having a single wavelength. In some examples, light 640 may be unpolarized. In other examples, light 640 may be elliptically polarized (e.g., partially circularly polarized). In yet other examples, light 640 may be circularly polarized (or at least substantially fully circularly polarized). In the case for unpolarized light, circular polarizer 610 may output circularly polarized light in region II having a handedness that matches that of circular polarizer 610. For example, if circular polarizer 610 is a right-handed circular polarizer, then output of circular polarizer 610 is right-handed circularly polarized, and vice versa for a left-handed circular polarizer. In the case for elliptically polarized light, circular polarizer 610 may output substantially fully circularly polarized light having a handedness that matches that of circular polarizer 610. In the case for substantially fully circularly polarized incident on circular polarizer 610, output light may be substantially unchanged.

If circularly polarized light in region II is incident on PBP lens 630, then light output by PBP lens 630 may be circularly polarized light and have a handedness that is opposite to that of the incident light (e.g., the light output by circular polarizer 610). For example, if the incident light is right-handed circularly polarized, then output of PBP lens 630 (e.g., acting like a half-wave plate) is left-handed circularly polarized. Additionally, light output (indicated by solid lines regions III and IV of the figure) by PBP lens 630 may be diffracted and focused to a focal point 650 in region IV.

In a case where system 600 does not include circular polarizer 610, or in a case where circular polarizer 610 does not circularly polarize all light 640 (e.g., such as the general case of light 640 including more than a single wavelength of light or light 640 incident at non-normal incident angle), for example, elliptically polarized light may be incident on PBP lens 630. For a particular example, consider the elliptically polarized light to be predominantly right circular polarized with a relatively small amount of left circular polarized light. In such a case, light output by PBP lens 630 may be predominantly left circular polarized (e.g., the conjugate order) and focused to focal point 650. Light output by PBP lens 630 may also include a relatively small amount of right circular polarized light 660 (e.g., the primary order) that diverges away from focal point 650. As described above, such primary order light may lead to ghosts or other detrimental image artifacts. Accordingly, including circular polarizer 610 provides a benefit of reducing primary order light 660.

As briefly mentioned above, circular polarizer 610 may not circularly polarize all light 640, particularly in the case where light 640 includes more than a single wavelength of light or light 640 incident at a non-normal incident angle. For example, light 640 may comprise three color channels for red, green, and blue, respectively, or light 640 is an off-axis collimated beam. Circular polarizer 610 may be configured to function for a particular wavelength (or particular color channel) of light at a particular angle and may function less than optimally (e.g., failing to circularly polarize all transmitted light) for other wavelengths and/or other angle of light. Thus, for example, circular polarizer 610 may be configured to function for one color channel and may function less than optimally for other color channels. In such situations, a primary order of light, such as 660, may be present whether or not circular polarizer 610 is present in system 600. Accordingly, circular polarizer 620 may be placed at the output side of PBP lens 630 to reduce primary order light 660.

In some examples, circular polarizer 620 may have a handedness that is opposite that of circular polarizer 610. Thus, primary order light 660 is polarized opposite to that of circular polarizer 620. Because of the opposing handedness, circular polarizer 620 may reduce or at least partially eliminate primary order light 660. For example, if circular polarizer 610 is right-handed, then circular polarizer 620 is left-handed. Because circular polarizer 610 is right-handed, PBP lens 630 may receive mostly right circular polarized light and subsequently produce a left-handed conjugate order (e.g., focused at focal point 650) and a right-handed primary order of light (e.g., 660). Thus, the primary order light is polarized opposite to that of circular polarizer 620 (which is left-handed), which will reduce or at least partially eliminate the primary order light.

In addition to primary order light (e.g., 660) resulting from circular polarizer 610 not circularly polarizing all light 640 (e.g., in the case where light 640 includes more than a single wavelength of light), leakage light 670 may result as a consequence of PBP lens 630 being configured to function for a particular wavelength (or particular color channel) of light so as to function less than optimally (e.g., producing or transmitting leakage light) for other wavelengths of light. Thus, for example, PBP lens 630 may be configured to function for one color channel and may function less than optimally for other color channels. In such situations, leakage light, such as 670, may be present in region III for all but one color channel. Accordingly, circular polarizer 620 may be placed at the output side of PBP lens 630 to reduce or at least partially eliminate leakage light 670. As described above, circular polarizer 620 may have a handedness that is opposite that of circular polarizer 610 (or, in examples sans circular polarizer 610, opposite to the handedness of circularly or elliptical polarized light incident on PBP lens 630). Thus, leakage light 670 is polarized opposite to that of circular polarizer 620. Because of the opposing handedness, circular polarizer 620 may reduce or at least partially eliminate leakage light 670. For example, if circular polarizer 610 (or light incident on PBP lens 630) is right-handed, then circular polarizer 620 is left-handed. Because circular polarizer 610 is right-handed, PBP lens 630 may receive mostly right circular polarized light and subsequently produce a left-handed conjugate order (e.g., focused at focal point 650) and a right-handed leakage light (e.g., 670). Thus, the leakage light is polarized opposite to that of circular polarizer 620 (which is left-handed), which will reduce or at least partially eliminate the leakage light.

FIG. 7 illustrates an example application of an optical system 700 that enables switchable optical power and incorporates circular polarizers and PBP lenses. System 700 includes a first circular polarizer 710 that is optional and need not be included in system 700 in some examples. System 700 also includes a second circular polarizer 720, a first PBP lens 730, a second PBP lens 740, a first switchable LC wave plate 750, and a second switchable LC wave plate 760. A depolarizer 770 is included in system 700. All or some of the components of system 700 (as in optical systems described below) may be in physically contact with one another, sharing substrate with one another, laminated with one another, optically in contact with one another, having index matching fluid or optical glue between one another, or may have space therebetween.

In examples described herein, first circular polarizer 710 is considered to be a left hand circular polarizer and second circular polarizer 720 is considered to be a right hand circular polarizer. In various examples, all or some of the components of system 700 may be in physical contact with one another, sharing a substrate with one another, laminated with one another, optically in contact with one another, having index matching fluid or optical glue between one another, and/or may have space therebetween.

Each of first and second switchable LC wave plates 750 and 760 may be electronically switchable to act as a half-wave plate or a full-wave plate. A half-wave plate adds a birefringent phase that switches the handedness of circular polarized light travelling through the half-wave plate (e.g., right circular polarized light becomes left circular polarized light, and vice versa). A full-wave plate does not add a net birefringent phase to circular polarized light travelling through the full-wave plate. For this reason, a full-wave plate does not switch the handedness of the circular polarized light (e.g., right circular polarized light remains right circular polarized light, and vice versa). The state of each of first and second switchable LC wave plates 750 and 760 may be selectable by applying a voltage above or below a threshold amount. A voltage above the threshold may result in a switchable LC wave plate being in a first state and a voltage below the threshold may result in a switchable LC wave plate being in a second state, for example.

System 700 may be incorporated in optical power-switchable glasses, for example. Light 780 may be incident along an optical axis 785 on depolarizer 770, which outputs non-polarized light, whether light 780 is polarized or already non-polarized. Depolarization may be beneficial for situations where light 780 originates in a real-world environment (as opposed to a virtual, computer-generated environment) because such light may be polarized in an unpredictable way, and thus lead to uncontrolled optical effects in system 700.

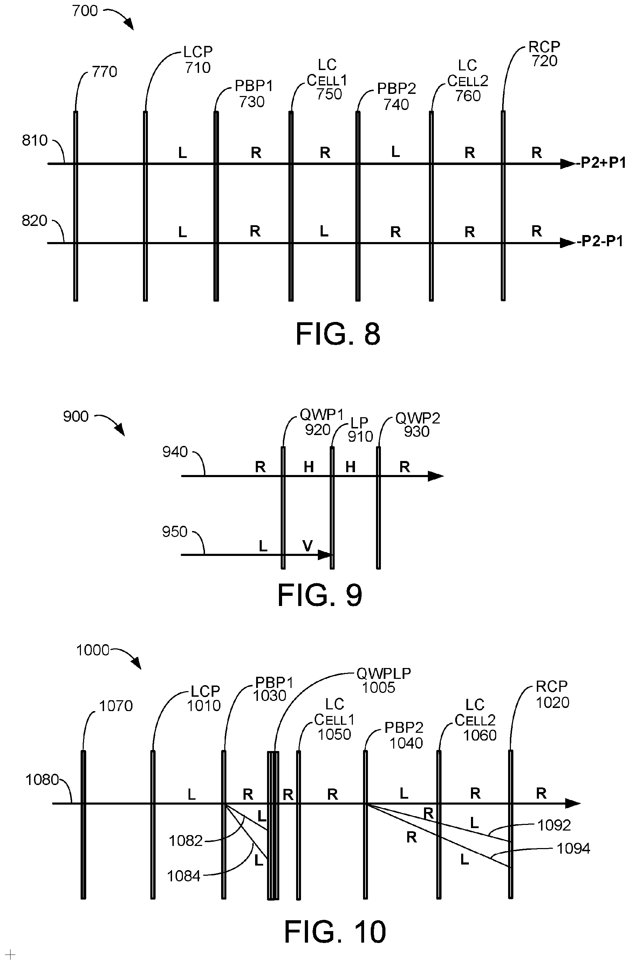

System 700 produces a virtual focal point 790 on the input side of the system. The location of focal point 790 may be switched by electronically switching one or both first and second switchable LC wave plates 750 and 760. Details of the characteristics of light travelling through system 700 are described below in conjunction with FIG. 8.

FIG. 8 illustrates the handedness and other details of circularly polarized light for optical system 700. Characteristics of the circularly polarized light depend, in part, on states of first and second switchable LC wave plates 750 and 760. Combinations of such states may determine, in part, the optical power produced by system 700. In a first example, light 810 is subjected to first switchable LC wave plate 750 being in a full-wave plate state so as to add a zero net birefringent phase to the light. Light 810 is also subjected to second switchable LC wave plate 760 being in a half-wave plate state so as to add a birefringent phase that switches the handedness of the light. In a second example, light 820 is subjected to first switchable LC wave plate 750 being in a half-wave plate state so as to add a birefringent phase that switches the handedness of the light. Light 820 is also subjected to second switchable LC wave plate 760 being in a full-wave plate state so as to add a zero net birefringent phase to the light.

In the first example, light 810, which is depolarized by depolarizer 770, becomes left circular polarized upon transmitting through first circular polarizer 710, which is left circular. The left circular polarized light subsequently becomes right circular polarized light and experiences a negative optical power, -P1, upon transmitting through first PBP lens 730. The right circular polarized light, having optical power -P1, next experiences first switchable LC wave plate 750 being in a full-wave plate state so as to add a zero net birefringent phase. Accordingly, the light remains right circular polarized. This right circular polarized light subsequently becomes left circular polarized light and experiences a positive optical power, +P2, upon transmitting through second PBP lens 740. The left circular polarized light, having optical power +P2, next experiences second switchable LC wave plate 760 being in a half-wave plate state so as to add a birefringent phase that switches the handedness of the light to right circular polarized. Subsequently, the right circular polarized light having a net optical power of -P1+P2 transmits through second circular polarizer 720, which is right circular. Because the handedness of the light and the handedness of second circular polarizer 720 are the same, the light transmits through second circular polarizer 720 substantially unaffected. Second circular polarizer 720, tends to block leakage light that may be present in light 810. For example, leakage light may result from any or a combination of elements in system 700 that have an optical performance that is at least partially dependent on wavelength, as described above.

In the second example, light 820, which may be depolarized by optional depolarizer 770, becomes left circular polarized upon transmitting through first circular polarizer 710, which is left circular. The left circular polarized light subsequently becomes right circular polarized light and experiences a negative optical power, -P1, upon transmitting through first PBP lens 730. The right circular polarized light, having optical power -P1, next experiences first switchable LC wave plate 750 being in a half-wave plate state so as to add a birefringent phase that switches the handedness of the light to left circular polarized. This left circular polarized light subsequently becomes right circular polarized light and experiences a negative optical power, -P2, upon transmitting through second PBP lens 740. The right circular polarized light, having optical power -P2, next experiences second switchable LC wave plate 760 being in a full-wave plate state so as to add a net birefringent phase of zero that does not change the handedness of the light. Accordingly, the light remains right circular polarized. Subsequently, the right circular polarized light having a net optical power of -P1-P2 transmits through second circular polarizer 720, which is right circular. Because the handedness of the light and the handedness of second circular polarizer 720 are the same, the light transmits through second circular polarizer 720 substantially unaffected. Second circular polarizer 720 tends to block leakage light that may be present in light 820. For example, leakage light may result from any or a combination of elements in system 700 that have an optical performance that is at least partially dependent on wavelength, as described above.

The examples above demonstrate how states of switchable LC wave plates can be used to electronically control optical power of a system. Though two switchable LC wave plates and two PBP lenses are involved in these examples, in various other examples, additional switchable LC wave plates and PBP lenses may be used to provide further control of optical power (e.g., providing more choices of optical power). In some examples, PBP lens 730 can be replaced by a traditional lens (concave, convex, spherical, aspheric, or freeform glass or plastic lens) or other static/passive lens which provides optical power -P1. Since a traditional lens has a chromatic dispersion opposite that of a PBP lens, overall chromatic dispersion is reduced, though the cost of a traditional lens involves a larger thickness than that of a PBP lens. Also, a traditional lens does not have undesired diffraction orders as does a PBP, so a traditional lens tends to have less problems with leakage and ghost images. In these examples, circular polarizer 710 is right circular polarized to provide right circularly polarized light to LC cell 750. In these examples, depolarizer 770 and circular polarizer 710 can be placed before PBP lens 730 or between PBP lens 730 and LC cell 750.

FIG. 9 illustrates the handedness of circularly and linearly polarized light for a quarter-wave plate linear polarizer (QWPLP) stack 900, which comprises a linear polarizer 910 between a first quarter-wave plate 920 and a second quarter-wave plate 930. QWPLP stack 900 may be used to reduce the intensities of stray light in an optical system arising from undesired diffraction orders of PBP lenses. For example, if an optical system is designed to operate using a first diffraction order of the output of a PBP lens, then the undesired diffraction order is the conjugate of the first order, as explained above.

To illustrate the operation of QWPLP stack 900, the evolution of input light 940 as it travels through the stack is described in a first example. The evolution of input light 950 as it travels through the stack is described in a second example. In both examples, linear polarizer 910 is considered to be oriented in the horizontal direction. In the first example, input light 940 is right circular polarized. Upon transmitting through first quarter-wave plate 920, the light is changed to linear polarized light having a horizontal orientation. This horizontally linear polarized light will transmit through linear polarizer 910 and remain horizontally linearly polarized. Finally, upon transmitting through second quarter-wave plate 930, the horizontally linearly polarized light is changed back to right circular polarized light, preserving the handedness on input light 940.

In the second example, input light 950 is left circular polarized. Upon transmitting through first quarter-wave plate 920, the light is changed to linear polarized light having a vertical orientation. This vertical linear polarized light will not transmit through linear polarizer 910 and is thus blocked. Accordingly, in view of the first and second examples, a QWPLP stack may be useful for preserving one handedness of circular polarized light while blocking the opposite handedness, thus increasing the purity of the desired handedness of circularly polarized light for the next optical element. In some examples, quarter-waveplate 930 can be oriented to produce opposite handedness of the output circular polarization. In this example, right circularly polarized input light 940 transmits to left circularly polarized while left circularly polarized input light 950 is being blocked.

FIG. 10 illustrates the handedness of circularly polarized light for an optical system 1000 that incorporates circular polarizers, quarter-wave plates, a linear polarizer, and PBP lenses. For example, system 1000 may be similar to system 700 with the addition of a QWPLP stack 1005. System 1000 includes a first circular polarizer 1010 that is optional and need not be included in system 700 in some examples. System 700 also includes a second circular polarizer 1020, a first PBP lens 1030, a second PBP lens 1040, a first switchable LC wave plate 1050, and a second switchable LC wave plate 1060. A depolarizer 1070, which is optional, may be included in system 1000 in some examples. In examples described herein, first circular polarizer 1010 is considered to be a left hand circular polarizer and second circular polarizer 1020 is considered to be a right hand circular polarizer. All or some of the components of system 1000 may be in physically contact with one another, sharing substrate with one another, laminated with one another, optically in contact with one another, having index matching fluid or optical glue between one another, or may have space therebetween. In the illustrated example, light 1080 is subjected to first switchable LC wave plate 1050 being in a full-wave plate state so as to add a zero net birefringent phase to the light. Light 1080 is also subjected to second switchable LC wave plate 1060 being in a half-wave plate state so as to add a birefringent phase that switches the handedness of the light.

Light 1080, which may be depolarized by optional depolarizer 1070, becomes left circular polarized upon transmitting through first circular polarizer 1010, which is left circular. The left circular polarized light subsequently becomes right circular light upon transmitting through first PBP lens 1030. This right circular light is the conjugate diffractive order of first PBP lens 1030. In addition, first PBP lens 1030 may produce light 1082 of the primary diffractive order, which is left circular polarized. Moreover, the output of first PBP lens 1030 may include leakage light 1084, which is also left circular polarized (e.g., the same polarization as that of the light incident on first PBP lens 1030. Though light 1082 and 1084 are illustrated in FIG. 10 with an angle to light 1080, such an angle is merely schematic and does not indicate that light 1082 and 1084 travel at such angles. Subsequently, QWPLP stack 1005, which is configured to transmit right circular polarized light and block left circular polarized light, transmits the right circular light of the conjugate diffractive order while blocking light 1082 of the primary diffractive order and leakage light 1084.

Subsequent to transmitting through QWPLP stack 1005, the right circular light experiences first switchable LC wave plate 1050 being in a full-wave plate state so as to add a zero net birefringent phase. Accordingly, the light remains right circular polarized. This right circular polarized light subsequently becomes left circular light upon transmitting through second PBP lens 1040. This left circular light is the primary diffractive order of second PBP lens 1040. In addition, second PBP lens 1040 may produce light 1092 of the conjugate diffractive order, which is right circular polarized. Moreover, the output of second PBP lens 1040 may include leakage light 1094, which is also right circular polarized (e.g., the same polarization as that of the light incident on second PBP lens 1040). Though light 1092 and 1094 are illustrated in FIG. 10 with an angle to light 1080, such an angle is merely schematic and does not indicate that light 1092 and 1094 travel at such angles. Subsequently, the left circular light of the primary diffractive order experiences second switchable LC wave plate 1060 being in a half-wave plate state so as to add a birefringent phase that switches the handedness of the light to right circular polarized. Meanwhile, the right circular light of the conjugate diffractive order and the right circular leakage light also experience second switchable LC wave plate 1060 being in the half-wave plate state so as to add birefringent phases that switch the handedness of the conjugate diffractive order light and the leakage light to left circular polarized.

Subsequently, the right circular polarized light transmits through second circular polarizer 1020, which is right circular. Because the handedness of the light and the handedness of second circular polarizer 720 are the same, the light transmits through second circular polarizer 1020 substantially unaffected. Second circular polarizer 1020, however, tends to block the conjugate diffractive order light 1092 and leakage light 1094.

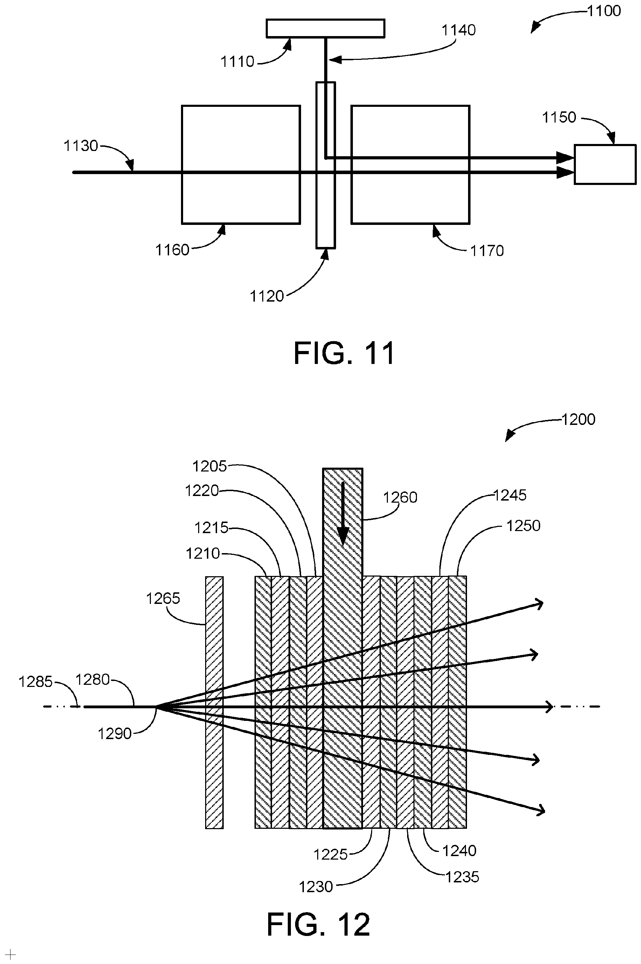

FIG. 11 illustrates a block diagram of an optical system 1100 that includes an image source 1110 and a lightguide 1120. System 1100 may be used in an augmented reality system that provides real-world light 1130 and virtual image light 1140 of a virtual world to a user's eye(s) 1150. Image source 1110 may be a light source and a pixelated light valve (not illustrated), such as an LCD display, for example. Virtual image light 1140 may be computer generated. System 1100 also includes a real-world image optical stack 1160, which transmits image light of the real-world, and a combined image optical stack 1170, which transmits image light of both the real-world and the virtual world. For some examples, real-world light of an augmented reality system is essentially unchanged, so that zero net optical power is applied to the real-world light. On the other hand, it may be desirable to apply optical power (e.g., magnification) to a virtual-world image. Thus, real-world image optical stack 1160 and combined image optical stack 1170 may include elements that have a combined effect of applying zero net optical power to real-world light and a non-zero optical power to the virtual-world image.

Lightguide 1120 may have a sheet-like or planar form to carry light via total internal reflection. An output portion of lightguide 1120 may include out-coupling features such as surface grooves or other shapes that redirect light from inside the lightguide to outside the lightguide and toward combined image optical stack 1170.

FIG. 12 illustrates an example application of an optical system 1200 that enables switchable optical power and incorporates circular polarizers and PBP lenses. System 1200 includes a quarter-wave plate 1205, a first PBP lens 1210, a first switchable LC wave plate 1215, a second PBP lens 1220, a first circular polarizer 1225, a third PBP lens 1230, a second switchable LC wave plate 1235, a fourth PBP lens 1240, a third switchable LC wave plate 1245, a second circular polarizer 1250, and a lightguide 1260. A depolarizer 1265, which is optional, may be included in system 1200 in some examples. First PBP lens 1210 is configured to produce an optical power of -P1 for incident light being left circular polarized, and to produce an optical power of +P1 for incident light being right circular polarized. Second PBP lens 1220 is configured to produce an optical power of -P2 for incident light being left circular polarized, and to produce an optical power of +P2 for incident light being right circular polarized. Third PBP lens 1230 is configured to produce an optical power of - P2 for incident light being left circular polarized, and to produce an optical power of +P2 for incident light being right circular polarized. Fourth PBP lens 1240 is configured to produce an optical power of -P1 for incident light being left circular polarized, and to produce an optical power of +P1 for incident light being right circular polarized.

Referring to the system architecture illustrated in FIG. 11, quarter-wave plate 1205, first PBP lens 1210, first switchable LC wave plate 1215, and second PBP lens 1220 may be considered to be a real-world image optical stack, such as 1160 in FIG. 11. First circular polarizer 1225, third PBP lens 1230, second switchable LC wave plate 1235, fourth PBP lens 1240, third switchable LC wave plate 1245, and second circular polarizer 1250 may be considered to be a combined image optical stack, such as 1170 in FIG. 11.

In examples described herein, first circular polarizer 1225 is considered to be a left hand circular polarizer and second circular polarizer 1250 is considered to be a right hand circular polarizer. In various examples, all or some of the components of system 1200 may be in physical contact with one another, sharing substrate with one another, laminated with one another, optically in contact with one another, having index matching fluid or optical glue between one another, or may have space therebetween.

Each of first, second, and third switchable LC wave plates, 1215, 1235, and 1245 may be electronically switchable to act as a half-wave plate or a full-wave plate. A half-wave plate adds a birefringent phase that switches the handedness of circular polarized light travelling through the half-wave plate (e.g., right circular polarized light becomes left circular polarized light, and vice versa). A full-wave plate does not add a net birefringent phase to circular polarized light travelling through the full-wave plate. For this reason, a full-wave plate does not switch the handedness of the circular polarized light (e.g., right circular polarized light remains right circular polarized light, and vice versa). The state of each of the switchable LC wave plates may be selectable by applying a voltage above or below a threshold amount. A voltage above the threshold may result in a switchable LC wave plate being in a first state and a voltage below the threshold may result in a switchable LC wave plate being in a second state, for example.

Real-world light 1280 may be incident along an optical axis 1285 on depolarizer 1265, which outputs non-polarized light, whether light 1280 is polarized or already non-polarized. Depolarization may be beneficial for real-world light because such light may be polarized in an unpredictable way, and thus lead to uncontrolled optical effects in system 1200.

System 1200 produces a virtual focal point 1290 on the real-world input side of the system. The location of focal point 1290 may be switched by electronically switching one or more of the switchable LC wave plates1215, 1235, and 1245. Details of the characteristics of light travelling through system 1200 are described below, in FIGs. 13 and 14.

FIGs. 13 and 14 illustrate the handedness and other details of circularly polarized light for optical system 1200. Characteristics of the circularly polarized light depend, in part, on states of first and second switchable LC wave plates1215, 1235, and 1245. Combinations of such states may determine, in part, the optical power produced by system 1200. In the example illustrated in FIG. 13, right-circular polarized light 1310 and left-circular polarized light 1315 are from an unpolarized virtual image source (e.g., 1110 in FIG. 11). Real-world right-circular polarized light 1320 and left-circular polarized light 1325 are subjected to first switchable LC wave plate 1215 being in a full-wave plate state so as to add a zero net birefringent phase that maintain the handedness of the light. Light 1315 and 1325 are also subjected to second switchable LC wave plate 1235 being in a full-wave plate state so as to add a zero net birefringent phase to the light. Finally, Light 1315 and 1325 are also subjected to third switchable LC wave plate 1245 being in a half-wave plate state so as to add a birefringent phase that switches the handedness of the light.

First describing the evolution of virtual-world light as the light travels through system 1200, light 1310 and light 1315 may be in a polarized state from the virtual image light source. Such a polarization state may be elliptical, so as to include both right circular and left circular polarized light, 1310 and 1315, respectively. Right circular polarized light 1310 is immediately blocked by first circular polarizer 1225, which is left circular. Left circular polarized light 1315 is transmitted by first circular polarizer 1225. This left circular polarized light subsequently becomes right circular light and experiences a negative optical power, -P2, upon transmitting through third PBP lens 1230. The right circular light, having optical power -P2, next experiences second switchable LC wave plate 1235 being in a full-wave plate state so as to add a zero net birefringent phase. Accordingly, the light remains right circular polarized. This right circular polarized light subsequently becomes left circular light and experiences a positive optical power, +P1, upon transmitting through fourth PBP lens 1240. The left circular light, having optical power +P1, next experiences third switchable LC wave plate 1245 being in a half-wave plate state so as to add a birefringent phase that switches the handedness of the light to right circular polarized. Subsequently, the right circular polarized light having a net optical power of -P2+P1 transmits through second circular polarizer 1250, which is right circular. Because the handedness of the light and the handedness of second circular polarizer 1250 are the same, the light transmits through second circular polarizer 1250 substantially unaffected. Second circular polarizer 1250, however, tends to block leakage light that may be present in light 1315. For example, leakage light may result from any or a combination of elements in system 1200 that have an optical performance that is at least partially dependent on wavelength, as described above.

Now describing the evolution of real-world light as it travels through system 1200, light 1320 may be right circularly polarized and 1325 may be left circularly polarized. Right circular polarized light 1320 becomes left circular polarized light and experiences a positive optical power, +P1, upon transmitting through first PBP lens 1210. The left circular polarized light, having optical power +P1, next experiences first switchable LC wave plate 1215 being in a full-wave plate state so as to add a zero net birefringent phase. Accordingly, the light remains left circular polarized. This left circular polarized light subsequently becomes right circular light and experiences a negative optical power, -P2, upon transmitting through second PBP lens 1220. The right circular light, having optical power -P2, next experiences quarter-wave plate 1205, which changes the right circular light to linear polarized light in the y-direction. This linear polarized light travels through lightguide 1260 with substantially no effect and next encounters first circular polarizer 1225. In some examples, first circular polarizer 1225 may comprise a linear polarizer in the x-direction and a quarter-wave plate. In such examples, the linear polarized light in the y-direction is blocked by the linear polarizer in the x-direction.

Left circular polarized light 1325 becomes right circular polarized light and experiences a negative optical power, -P1, upon transmitting through first PBP lens 1210. The right circular polarized light, having optical power -P1, next experiences first switchable LC wave plate 1215 being in a full-wave plate state so as to add a zero net birefringent phase. Accordingly, the light remains right circular polarized. This right circular polarized light subsequently becomes left circular light and experiences a positive optical power, +P2, upon transmitting through second PBP lens 1220. The left circular light, having optical power +P2, next experiences quarter-wave plate 1205, which changes the left circular light to linear polarized light in the x-direction. This linear polarized light travels through lightguide 1260 with substantially no effect and next encounters first circular polarizer 1225. In the case where first circular polarizer 1225 comprises a linear polarizer in the x-direction and a quarter-wave plate, the linear polarized light in the x-direction is transmitted by the linear polarizer in the x-direction. Meanwhile, the quarter-wave plate changes the linear polarized light in the x-direction to left circular polarized light. This left circular polarized light subsequently becomes right circular light and experiences a negative optical power, -P2, upon transmitting through third PBP lens 1230. The right circular light, having optical power -P2, next experiences second switchable LC wave plate 1235 being in a full-wave plate state so as to add a zero net birefringent phase. Accordingly, the light remains right circular polarized. This right circular polarized light subsequently becomes left circular polarized light and experiences a positive optical power, +P1, upon transmitting through fourth PBP lens 1240. The left circular light, having optical power +P1, next experiences third switchable LC wave plate 1245 being in a half-wave plate state so as to add a birefringent phase that switches the handedness of the light to right circular polarized. Subsequently, the right circular polarized light having a net optical power of zero (-P1+P2-P2+P1) transmits through second circular polarizer 1250, which is right circular. Because the handedness of the light and the handedness of second circular polarizer 1250 are the same, the light transmits through second circular polarizer 1250 substantially unaffected and any left circularly polarized ghosts are blocked.

In the example illustrated in FIG. 14, right-circular polarized light 1410 and left-circular polarized light 1415 are from an unpolarized virtual image source (e.g., 1110 in FIG. 11). Real-world left-circular polarized light 1420 and right-circular polarized light 1425 are subjected to first switchable LC wave plate 1215 being in a half-wave plate state so as to add a birefringent phase that switches the handedness of the light. Light 1415 and 1425 are also subjected to second switchable LC wave plate 1235 being in a half-wave plate state. Finally, Light 1415 and 1425 are also subjected to third switchable LC wave plate 1245 being in a full-wave plate state so as to add a zero net birefringent phase to the light.

First describing the evolution of virtual-world light as it travels through system 1200, light 1410 and light 1415 may be in a polarized state from the virtual image light source. Such a polarization state may be elliptical, so as to include both right circular and left circular polarized light, 1410 and 1415, respectively. Right circular polarized light 1410 is immediately blocked by first circular polarizer 1225, which is left circular. Left circular polarized light 1415 is transmitted by first circular polarizer 1225. This left circular polarized light subsequently becomes right circular light and experiences a negative optical power, -P2, upon transmitting through third PBP lens 1230. The right circular light, having optical power -P2, next experiences second switchable LC wave plate 1235 being in a half-wave plate state so as to add a birefringent phase that switches the handedness of the light. Accordingly, the light changes to left circular polarized. This left circular polarized light subsequently becomes right circular polarized light and experiences a negative optical power, -P1, upon transmitting through fourth PBP lens 1240. The right circular light, having optical power -P1, next experiences third switchable LC wave plate 1245 being in a full-wave plate state so as to add a zero net birefringent phase to the light. Subsequently, the right circular polarized light remains right circular and has a net optical power of -P2-P1 and transmits through second circular polarizer 1250, which is right circular. Because the handedness of the light and the handedness of second circular polarizer 1250 are the same, the light transmits through second circular polarizer 1250 substantially unaffected. Second circular polarizer 1250, however, tends to block leakage light that may be present in light 1415. For example, leakage light may result from any or a combination of elements in system 1200 that have an optical performance that is at least partially dependent on wavelength, as described above.

Now describing the evolution of real-world light as the light travels through system 1200, light 1420 may be left circularly polarized and 1425 may be right circularly polarized. Left circular polarized light 1420 becomes right circular polarized light and experiences a negative optical power, -P1, upon transmitting through first PBP lens 1210. The right circular polarized light, having optical power -P1, next experiences first switchable LC wave plate 1215 being in a half-wave plate state so as to add a birefringent phase that switches the handedness of the light. Accordingly, the light changes to left circular polarized. This left circular polarized light subsequently becomes right circular light and experiences a negative optical power, - P2, upon transmitting through second PBP lens 1220. The right circular light, having optical power -P2, next experiences quarter-wave plate 1205, which changes the right circular light to linear polarized light in the y-direction. This linear polarized light travels through lightguide 1260 with substantially no effect and next encounters first circular polarizer 1225. In some examples, first circular polarizer 1225 may comprise a linear polarizer in the x-direction and a quarter-wave plate. In such examples, the linear polarized light in the y-direction is blocked by the linear polarizer in the x-direction.

Right circular polarized light 1425 becomes left circular polarized light and experiences a positive optical power, +P1, upon transmitting through first PBP lens 1210. The left circular polarized light, having optical power +P1, next experiences first switchable LC wave plate 1215 being in a half-wave plate state so as to add a birefringent phase that switches the handedness of the light. Accordingly, the light changes to right circular polarized. This right circular polarized light subsequently becomes left circular light and experiences a positive optical power, +P2, upon transmitting through second PBP lens 1220. The left circular light, having optical power +P2, next experiences quarter-wave plate 1205, which changes the left circular light to linear polarized light in the x-direction. This linear polarized light travels through lightguide 1260 with substantially no effect and next encounters first circular polarizer 1225. In the case where first circular polarizer 1225 comprises a linear polarizer in the x-direction and a quarter-wave plate, the linear polarized light in the x-direction is transmitted by the linear polarizer in the x-direction. Meanwhile, the quarter-wave plate changes the linear polarized light in the x-direction to left circular polarized light. This left circular polarized light subsequently becomes right circular light and experiences a negative optical power, -P2, upon transmitting through third PBP lens 1230. The right circular light, having optical power -P2, next experiences second switchable LC wave plate 1235 being in a half-wave plate state so as to add a birefringent phase that switches the handedness of the light. Accordingly, the light changes to left circular polarized. This left circular polarized light subsequently becomes right circular polarized light and experiences a negative optical power, -P1, upon transmitting through fourth PBP lens 1240. The right circular light, having optical power 1 P1, next experiences third switchable LC wave plate 1245 being in a full-wave plate state so as to add a zero net birefringent phase to the light. Thus, the right circular polarized light remains right circular. Subsequently, the right circular polarized light having a net optical power of zero (+P1 +P2-P2-P1) transmits through second circular polarizer 1250, which is right circular. Because the handedness of the light and the handedness of second circular polarizer 1250 are the same, the light transmits through second circular polarizer 1250 substantially unaffected and any left circularly polarized ghosts are blocked

In some examples of system 1200, PBP lens 1230 and PBP lens 1220 can be replaced by traditional lenses (concave, convex, spherical, aspheric, or freeform glass or plastic lens) or other static/passive lenses which provide optical power -P2 and +P2, respectively. By replacing left circular polarizer 1225 by a right circular polarizer and adjusting quarter waveplate orientation to convert right circularly polarized to linearly polarized light in x-direction, the polarization evolution of light 1310, 1315, 1320, 1325, 1410, 1415, 1420 and 1425 in Fig. 13 and Fig. 14 will stay the same. Since traditional lens has opposite chromatic dispersion than PBP lens, the overall chromatic dispersion is reduced with the cost of traditional lens requires larger thickness than PBP lens. Also, traditional lenses do not have undesired diffraction orders as PBP has, thus tends to have less leakage and ghost images.

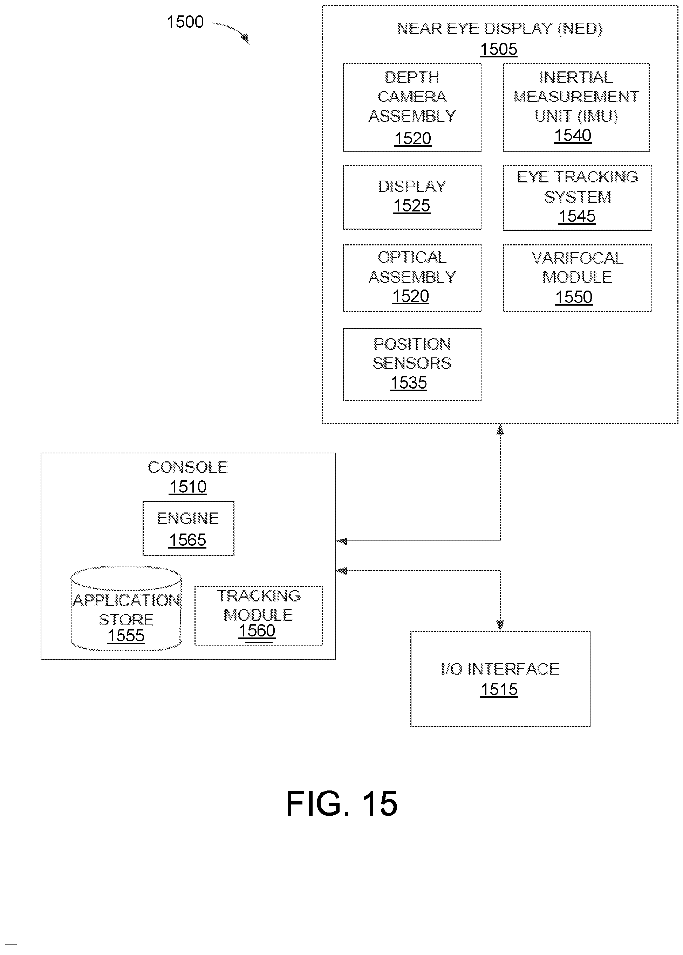

FIG. 15 is a block diagram of a near eye display (NED) system 1500 in which a console 1510 operates. The NED system 1500 may operate in a virtual reality (VR) system environment, an augmented reality (AR) system environment, a mixed reality (MR) system environment, or some combination thereof. The NED system 1500 shown in FIG. 15 comprises a NED 1505 and an input/output (I/O) interface 1515 that is coupled to the console 1510.

While FIG. 15 shows an example NED system 1500 including one NED 1505 and one I/O interface 1515, in other examples any number of these components may be included in the NED system 1500. For example, there may be multiple NEDs 1505 that each has an associated I/O interface 1515, where each NED 1505 and I/O interface 1515 communicates with the console 1510. In alternative configurations, different and/or additional components may be included in the NED system 1500. Additionally, various components included within the NED 1505, the console 1510, and the I/O interface 1515 may be distributed in a different manner than is described in conjunction with FIG. 15 in some examples. For example, some or all of the functionality of the console 1510 may be provided by the NED 1505.

The NED 1505 may be a head-mounted display that presents content to a user. The content may include virtual and/or augmented views of a physical, real-world environment including computer-generated elements (e.g., two-dimensional or three-dimensional images, two-dimensional or three-dimensional video, sound, etc.). In some examples, the NED 1505 may also present audio content to a user. The NED 1505 and/or the console 1510 may transmit the audio content to an external device via the I/O interface 1515. The external device may include various forms of speaker systems and/or headphones. In various examples, the audio content is synchronized with visual content being displayed by the NED 1505.

The NED 1505 may comprise one or more rigid bodies, which may be rigidly or non-rigidly coupled together. A rigid coupling between rigid bodies causes the coupled rigid bodies to act as a single rigid entity. In contrast, a non-rigid coupling between rigid bodies allows the rigid bodies to move relative to each other.

As shown in FIG. 15, the NED 1505 may include a depth camera assembly (DCA) 1520, a display 1525, an optical assembly 1530, one or more position sensors 1535, an inertial measurement unit (IMU) 1540, an eye tracking system 1545, and a varifocal module 1550. In some examples, the display 1525 and the optical assembly 1530 can be integrated together into a projection assembly. Various examples of the NED 1505 may have additional, fewer, or different components than those listed above. Additionally, the functionality of each component may be partially or completely encompassed by the functionality of one or more other components in various examples.

The DCA 1520 captures sensor data describing depth information of an area surrounding the NED 1505. The sensor data may be generated by one or a combination of depth imaging techniques, such as triangulation, structured light imaging, time-of-flight imaging, laser scan, and so forth. The DCA 1520 can compute various depth properties of the area surrounding the NED 1505 using the sensor data. Additionally or alternatively, the DCA 1520 may transmit the sensor data to the console 1510 for processing.

The DCA 1520 includes an illumination source, an imaging device, and a controller. The illumination source emits light onto an area surrounding the NED 1505. In an example, the emitted light is structured light. The illumination source includes a plurality of emitters that each emits light having certain characteristics (e.g., wavelength, polarization, coherence, temporal behavior, etc.). The characteristics may be the same or different between emitters, and the emitters can be operated simultaneously or individually. In one example, the plurality of emitters could be, e.g., laser diodes (such as edge emitters), inorganic or organic light-emitting diodes (LEDs), a vertical-cavity surface-emitting laser (VCSEL), or some other source. In some examples, a single emitter or a plurality of emitters in the illumination source can emit light having a structured light pattern. The imaging device captures ambient light in the environment surrounding NED 1505, in addition to light reflected off of objects in the environment that is generated by the plurality of emitters. In various examples, the imaging device may be an infrared camera or a camera configured to operate in a visible spectrum. The controller coordinates how the illumination source emits light and how the imaging device captures light. For example, the controller may determine a brightness of the emitted light. In some examples, the controller also analyzes detected light to detect objects in the environment and position information related to those objects.

The display 1525 displays two-dimensional or three-dimensional images to the user in accordance with pixel data received from the console 1510. In various examples, the display 1525 comprises a single display or multiple displays (e.g., separate displays for each eye of a user). In some examples, the display 1525 comprises a single or multiple waveguide displays. Light can be coupled into the single or multiple waveguide displays via, e.g., a liquid crystal display (LCD), an organic light emitting diode (OLED) display, an inorganic light emitting diode (ILED) display, an active-matrix organic light-emitting diode (AMOLED) display, a transparent organic light emitting diode (TOLED) display, a laser-based display, one or more waveguides, other types of displays, a scanner, a one-dimensional array, and so forth. In addition, combinations of the displays types may be incorporated in display 1525 and used separately, in parallel, and/or in combination.

The optical assembly 1530 magnifies image light received from the display 1525, corrects optical errors associated with the image light, and presents the corrected image light to a user of the NED 1505. The optical assembly 1530 includes a plurality of optical elements. For example, one or more of the following optical elements may be included in the optical assembly 1530: an aperture, a Fresnel lens, a convex lens, a concave lens, a filter, a reflecting surface, or any other suitable optical element that deflects, reflects, refracts, and/or in some way alters image light. Moreover, the optical assembly 1530 may include combinations of different optical elements. In some examples, one or more of the optical elements in the optical assembly 1530 may have one or more coatings, such as partially reflective or antireflective coatings. The optical assembly 1530 can be integrated into a projection assembly, e.g., a projection assembly. In one example, the optical assembly 1530 includes the optics block 155.

In operation, the optical assembly 1530 magnifies and focuses image light generated by the display 1525. In so doing, the optical assembly 1530 enables the display 1525 to be physically smaller, weigh less, and consume less power than displays that do not use the optical assembly 1530. Additionally, magnification may increase the field of view of the content presented by the display 1525. For example, the field of view of the displayed content partially or completely uses a user's field of view. For example, the field of view of a displayed image may meet or exceed 1510 degrees. In various examples, the amount of magnification may be adjusted by adding or removing optical elements.

In some examples, the optical assembly 1530 may be designed to correct one or more types of optical errors. Examples of optical errors include barrel or pincushion distortions, longitudinal chromatic aberrations, or transverse chromatic aberrations. Other types of optical errors may further include spherical aberrations, chromatic aberrations or errors due to the lens field curvature, astigmatisms, in addition to other types of optical errors. In some examples, visual content transmitted to the display 1525 is pre-distorted, and the optical assembly 1530 corrects the distortion as image light from the display 1525 passes through various optical elements of the optical assembly 1530. In some examples, optical elements of the optical assembly 1530 are integrated into the display 1525 as a projection assembly that includes at least one waveguide coupled with one or more optical elements.

The IMU 1540 is an electronic device that generates data indicating a position of the NED 1505 based on measurement signals received from one or more of the position sensors 1535 and from depth information received from the DCA 1520. In some examples of the NED 1505, the IMU 1540 may be a dedicated hardware component. In other examples, the IMU 1540 may be a software component implemented in one or more processors. In one example, the IMU 1540 is the same component as the IMU 1515 of FIG. 15A and the position sensors 1535 are the same components as the position sensors 1520.

In operation, a position sensor 1535 generates one or more measurement signals in response to a motion of the NED 1505. Examples of position sensors 1535 include: one or more accelerometers, one or more gyroscopes, one or more magnetometers, one or more altimeters, one or more inclinometers, and/or various types of sensors for motion detection, drift detection, and/or error detection. The position sensors 1535 may be located external to the IMU 1540, internal to the IMU 1540, or some combination thereof.

Based on the one or more measurement signals from one or more position sensors 1535, the IMU 1540 generates data indicating an estimated current position of the NED 1505 relative to an initial position of the NED 1505. For example, the position sensors 1535 include multiple accelerometers to measure translational motion (forward/back, up/down, left/right) and multiple gyroscopes to measure rotational motion (e.g., pitch, yaw, and roll). In some examples, the IMU 1540 rapidly samples the measurement signals and calculates the estimated current position of the NED 1505 from the sampled data. For example, the IMU 1540 integrates the measurement signals received from the accelerometers over time to estimate a velocity vector and integrates the velocity vector over time to determine an estimated current position of a reference point on the NED 1505. Alternatively, the IMU 1540 provides the sampled measurement signals to the console 1510, which analyzes the sample data to determine one or more measurement errors. The console 1510 may further transmit one or more of control signals and/or measurement errors to the IMU 1540 to configure the IMU 1540 to correct and/or reduce one or more measurement errors (e.g., drift errors). The reference point is a point that may be used to describe the position of the NED 1505. The reference point may generally be defined as a point in space or a position related to a position and/or orientation of the NED 1505.

In various examples, the IMU 1540 receives one or more parameters from the console 1510. The one or more parameters are used to maintain tracking of the NED 1505. Based on a received parameter, the IMU 1540 may adjust one or more IMU parameters (e.g., a sample rate). In some examples, certain parameters cause the IMU 1540 to update an initial position of the reference point so that it corresponds to a next position of the reference point. Updating the initial position of the reference point as the next calibrated position of the reference point helps reduce drift errors in detecting a current position estimate of the IMU 1540.

In some examples, the eye tracking system 1545 is integrated into the NED 1505. The eye-tracking system 1545 may comprise one or more illumination sources and an imaging device (camera). In operation, the eye tracking system 1545 generates and analyzes tracking data related to a user's eyes as the user wears the NED 1505. The eye tracking system 1545 may further generate eye tracking information that may comprise information about a position of the user's eye, i.e., information about an angle of an eye-gaze.

In some examples, the varifocal module 1550 is further integrated into the NED 1505. The varifocal module 1550 may be communicatively coupled to the eye tracking system 1545 in order to enable the varifocal module 1550 to receive eye tracking information from the eye tracking system 1545. The varifocal module 1550 may further modify the focus of image light emitted from the display 1525 based on the eye tracking information received from the eye tracking system 1545. Accordingly, the varifocal module 1550 can reduce vergence-accommodation conflict that may be produced as the user's eyes resolve the image light. In various examples, the varifocal module 1550 can be interfaced (e.g., either mechanically or electrically) with at least one optical element of the optical assembly 1530.

In operation, the varifocal module 1550 may adjust the position and/or orientation of one or more optical elements in the optical assembly 1530 in order to adjust the focus of image light propagating through the optical assembly 1530. In various examples, the varifocal module 1550 may use eye tracking information obtained from the eye tracking system 1545 to determine how to adjust one or more optical elements in the optical assembly 1530. In some examples, the varifocal module 1550 may perform foveated rendering of the image light based on the eye tracking information obtained from the eye tracking system 1545 in order to adjust the resolution of the image light emitted by the display 1525. In this case, the varifocal module 1550 configures the display 1525 to display a high pixel density in a foveal region of the user's eye-gaze and a low pixel density in other regions of the user's eye-gaze.

The I/O interface 1515 facilitates the transfer of action requests from a user to the console 1510. In addition, the I/O interface 1515 facilitates the transfer of device feedback from the console 1510 to the user. An action request is a request to perform a particular action. For example, an action request may be an instruction to start or end capture of image or video data or an instruction to perform a particular action within an application, such as pausing video playback, increasing or decreasing the volume of audio playback, and so forth. In various examples, the I/O interface 1515 may include one or more input devices. Example input devices include: a keyboard, a mouse, a game controller, a joystick, and/or any other suitable device for receiving action requests and communicating the action requests to the console 1510. In some examples, the I/O interface 1515 includes an IMU 1540 that captures calibration data indicating an estimated current position of the I/O interface 1515 relative to an initial position of the I/O interface 1515.

In operation, the I/O interface 1515 receives action requests from the user and transmits those action requests to the console 1510. Responsive to receiving the action request, the console 1510 performs a corresponding action. For example, responsive to receiving an action request, console 1510 may configure I/O interface 1515 to emit haptic feedback onto an arm of the user. For example, console 1515 may configure I/O interface 1515 to deliver haptic feedback to a user when an action request is received. Additionally or alternatively, the console 1510 may configure the I/O interface 1515 to generate haptic feedback when the console 1510 performs an action, responsive to receiving an action request.

The console 1510 provides content to the NED 1505 for processing in accordance with information received from one or more of: the DCA 1520, the NED 1505, and the I/O interface 1515. In the example shown in FIG. 15, the console 1510 includes an application store 1555, a tracking module 1560, and an engine 1565. In some examples, the console 1510 may have additional, fewer, or different modules and/or components than those described in conjunction with FIG. 15. Similarly, the functions further described below may be distributed among components of the console 1510 in a different manner than described in conjunction with FIG. 15.

The application store 1555 stores one or more applications for execution by the console 1510. An application is a group of instructions that, when executed by a processor, performs a particular set of functions, such as generating content for presentation to the user. For example, an application may generate content in response to receiving inputs from a user (e.g., via movement of the NED 1505 as the user moves his/her head, via the I/O interface 1515, etc.). Examples of applications include: gaming applications, conferencing applications, video playback applications, or other suitable applications.

The tracking module 1560 calibrates the NED system 1500 using one or more calibration parameters. The tracking module 1560 may further adjust one or more calibration parameters to reduce error in determining a position and/or orientation of the NED 1505 or the I/O interface 1515. For example, the tracking module 1560 may transmit a calibration parameter to the DCA 1520 in order to adjust the focus of the DCA 1520. Accordingly, the DCA 1520 may more accurately determine positions of structured light elements reflecting off of objects in the environment. The tracking module 1560 may also analyze sensor data generated by the IMU 1540 in determining various calibration parameters to modify. Further, in some examples, if the NED 1505 loses tracking of the user's eye, then the tracking module 1560 may re-calibrate some or all of the components in the NED system 1500. For example, if the DCA 1520 loses line of sight of at least a threshold number of structured light elements projected onto the user's eye, the tracking module 1560 may transmit calibration parameters to the varifocal module 1550 in order to reestablish eye tracking.

The tracking module 1560 tracks the movements of the NED 1505 and/or of the I/O interface 1515 using information from the DCA 1520, the one or more position sensors 1535, the IMU 1540 or some combination thereof. For example, the tracking module 1560 may determine a reference position of the NED 1505 from a mapping of an area local to the NED 1505. The tracking module 1560 may generate this mapping based on information received from the NED 1505 itself. The tracking module 1560 may also utilize sensor data from the IMU 1540 and/or depth data from the DCA 1520 to determine references positions for the NED 1505 and/or I/O interface 1515. In various examples, the tracking module 1560 generates an estimation and/or prediction for a subsequent position of the NED 1505 and/or the I/O interface 1515. The tracking module 1560 may transmit the predicted subsequent position to the engine 1565.

The engine 1565 generates a three-dimensional mapping of the area surrounding the NED 1505 (i.e., the "local area") based on information received from the NED 1505. In some examples, the engine 1565 determines depth information for the three-dimensional mapping of the local area based on depth data received from the DCA 1520 (e.g., depth information of objects in the local area). In some examples, the engine 1565 calculates a depth and/or position of the NED 1505 by using depth data generated by the DCA 1520. In particular, the engine 1565 may implement various techniques for calculating the depth and/or position of the NED 1505, such as stereo based techniques, structured light illumination techniques, time-of-flight techniques, and so forth. In various examples, the engine 1565 uses depth data received from the DCA 1520 to update a model of the local area and to generate and/or modify media content based in part on the updated model.

The engine 1565 also executes applications within the NED system 1500 and receives position information, acceleration information, velocity information, predicted future positions, or some combination thereof, of the NED 1505 from the tracking module 1560. Based on the received information, the engine 1565 determines various forms of media content to transmit to the NED 1505 for presentation to the user. For example, if the received information indicates that the user has looked to the left, the engine 1565 generates media content for the NED 1505 that mirrors the user's movement in a virtual environment or in an environment augmenting the local area with additional media content. Accordingly, the engine 1565 may generate and/or modify media content (e.g., visual and/or audio content) for presentation to the user. The engine 1565 may further transmit the media content to the NED 1505. Additionally, in response to receiving an action request from the I/O interface 1515, the engine 1565 may perform an action within an application executing on the console 1510. The engine 1505 may further provide feedback when the action is performed. For example, the engine 1565 may configure the NED 1505 to generate visual and/or audio feedback and/or the I/O interface 1515 to generate haptic feedback to the user.

In some examples, based on the eye tracking information (e.g., orientation of the user's eye) received from the eye tracking system 1545, the engine 1565 determines a resolution of the media content provided to the NED 1505 for presentation to the user on the display 1525. The engine 1565 may adjust a resolution of the visual content provided to the NED 1505 by configuring the display 1525 to perform foveated rendering of the visual content, based at least in part on a direction of the user's gaze received from the eye tracking system 1545. The engine 1565 provides the content to the NED 1505 having a high resolution on the display 1525 in a foveal region of the user's gaze and a low resolution in other regions, thereby reducing the power consumption of the NED 1505. In addition, using foveated rendering reduces a number of computing cycles used in rendering visual content without compromising the quality of the user's visual experience. In some examples, the engine 1565 can further use the eye tracking information to adjust a focus of the image light emitted from the display 1525 in order to reduce vergence-accommodation conflicts.

The foregoing description of the embodiments and examples of the disclosure has been presented for the purpose of illustration; it is not intended to be exhaustive or to limit the disclosure to the precise forms disclosed. Persons skilled in the relevant art can appreciate that many modifications and variations are possible in light of the above disclosure.

Some portions of this description describe the embodiments of the disclosure in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments of the disclosure may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the disclosure may also relate to a product that is produced by a computing process described herein. Such a product may comprise information resulting from a computing process, where the information is stored on a non-transitory, tangible computer readable storage medium and may include any embodiment of a computer program product or other data combination described herein.

Finally, the language used in the specification has been principally selected for readability and instructional purposes, and it may not have been selected to delineate or circumscribe the inventive subject matter. It is therefore intended that the scope of the disclosure be limited not by this detailed description, but rather by any claims that issue on an application based hereon. Accordingly, the disclosure of the embodiments is intended to be illustrative, but not limiting, of the scope of the disclosure, which is set forth in the following claims.

The descriptions of the various embodiments have been presented for purposes of illustration, but are not intended to be exhaustive or limited to the embodiments disclosed.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a ""module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It is understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. An optical system (700), comprising:
a geometric phase element configured to produce a first light beam associated with a first diffraction order and a second light beam associated with a second diffraction order in response to receiving input light; and
a first elliptical polarizer (720) configured to reduce an intensity of the first light beam and substantially preserve an intensity of the second light beam;
**characterized in that** the optical system further comprises:
a second elliptical polarizer (710); and
a depolarizer (770) configured to provide unpolarized light to the second elliptical polarizer (710).

2. The optical system (700) of claim 1, wherein the first elliptical polarizer (720) comprises a circular polarizer having a first handedness and the second elliptical polarizer (710) comprises a circular polarizer having a second handedness that is opposite to the first handedness.

3. The optical system (700) of claim 1 or claim 2, wherein the geometric phase element is further configured to produce a third light beam associated with a third diffraction order, and the first elliptical polarizer (720) is further configured to reduce an intensity of the third light beam.

4. The optical system (700) of any of claims 1 to 3, wherein the geometric phase element comprises a switchable Pancharatnam Berry Phase, PBP, lens (730); preferably wherein the geometric phase element comprises a stack of two or more PBP lenses (730, 740); further preferably wherein the geometric phase element comprises a PBP grating (300).

5. The optical system (700) of any of claims 1 to 4, further comprising a traditional lens to provide the input light to the geometric phase element.

6. The optical system (700) of any of claims 1 to 5, wherein the geometric phase element comprises a first stack that includes a first PBP lens (730) having a first optical power and a second PBP lens (740) having a second optical power, the optical system (700) further comprising:
a lightguide (1120) configured to provide image light to the first elliptical polarizer (720); and
a second stack of PBP lenses comprising a third PBP lens having an optical power that is a conjugate of the first optical power and a fourth PBP lens having an optical power that is a conjugate of the second optical power.

7. The optical system (700) of claim 6, wherein at least one of the first, second, third, and fourth PBP lenses comprises a switchable PBP lens to provide a switchable image plane;
preferably further comprising a plurality of electrically switchable PBP liquid crystal half-wave plates (1215, 1235, 1245), each of the plurality of electrically switchable PBP liquid crystal half-wave plates (1215, 1235, 1245) adjacent to a different one of the first (730), second (740), third, and fourth PBP lenses, the plurality of electrically switchable PBP liquid crystal half-wave plates (1215, 1235, 1245) and the first (730), second (740), third, and fourth PBP lenses configured to provide a switchable image plane;
further preferably further comprising a liquid crystal display device (1110) to provide the image light to the lightguide (1120).

8. The optical system (700) of any of claims 1 to 7, wherein the optical system is included in an augmented reality head mounted device (1505).

9. The optical system (700) of any of claims 1 to 8, further comprising:
a first quarter-wave plate and a second quarter-wave plate adjacent to the geometric phase element; and
a linear polarizer between the first and the second quarter-wave plate.

10. A head-mounted display, HMD, (1505) comprising:
an electronic display (1525) configured to emit image light;
a first stack of Pancharatnam Berry Phase, PBP, geometric phase elements configured to produce a first light beam associated with a first diffraction order and a second light beam associated with a second diffraction order in response to the image light; and
a first elliptical polarizer (720) configured to reduce an intensity of the first light beam and substantially preserve an intensity of the second light beam;
**characterized in that** the HMD (1505) further comprises:
a second elliptical polarizer (710); and
a depolarizer configured to provide unpolarized light to the second elliptical polarizer (710).

11. The HMD (1505) of claim 10, further comprising:
a second stack of PBP geometric phase elements configured to produce output light; and
a lightguide (1120) between the first and the second stack of PBP geometric phase elements, the lightguide (1120) configured to provide the image light to the first stack of PBP geometric phase elements and to transmit the output light produced by the second stack of PBP geometric phase elements.

12. The HMD (1505) of claim 10 or 11, wherein the first stack of PBP geometric phase elements includes a first PBP lens (730) having a first optical power and a second PBP lens (740) having a second optical power, and wherein the second stack of PBP geometric phase elements includes a third PBP lens having an optical power that is opposite to the first optical power and a fourth PBP lens having an optical power that is opposite to the second optical power;
optionally, further comprising electrically switchable PBP liquid crystal half-wave plates (1215, 1235, 1245) respectively adjacent to the first (730), second (740), third, and fourth PBP lenses, the electrically switchable PBP liquid crystal half-wave plates (1215, 1235, 1245) and the first (730), second (740), third, and fourth PBP lenses to provide a switchable image plane.

## Patentansprüche

1. Ein optisches System (700), das Folgendes beinhaltet:
ein geometrisches Phasenelement, das konfiguriert ist, um als Reaktion auf das Empfangen von Eingangslicht einen ersten Lichtstrahl, der mit einer ersten Beugungsordnung assoziiert ist, und einen zweiten Lichtstrahl, der mit einer zweiten Beugungsordnung assoziiert ist, zu erzeugen; und
einen ersten elliptischen Polarisator (720), der konfiguriert ist, um eine Intensität des ersten Lichtstrahls zu reduzieren und eine Intensität des zweiten Lichtstrahls im Wesentlichen zu bewahren;
**dadurch gekennzeichnet, dass** das optische System ferner Folgendes beinhaltet:
einen zweiten elliptischen Polarisator (710); und
einen Depolarisator (770), der konfiguriert ist, um dem zweiten elliptischen Polarisator (710) unpolarisiertes Licht bereitzustellen.

2. Optisches System (700) gemäß Anspruch 1, wobei der erste elliptische Polarisator (720) einen Zirkularpolarisator beinhaltet, der eine erste Drehrichtung aufweist, und der zweite elliptische Polarisator (710) einen Zirkularpolarisator beinhaltet, der eine zweite Drehrichtung aufweist, die entgegengesetzt zu der ersten Drehrichtung ist.

3. Optisches System (700) gemäß Anspruch 1 oder Anspruch 2, wobei das geometrische Phasenelement ferner konfiguriert ist, um einen dritten Lichtstrahl, der mit einer dritten Beugungsordnung assoziiert ist, zu erzeugen, und der erste elliptische Polarisator (720) ferner konfiguriert ist, um eine Intensität des dritten Lichtstrahls zu reduzieren.

4. Optisches System (700) gemäß einem der Ansprüche 1 bis 3, wobei das geometrische Phasenelement eine schaltbare Pancharatnam-Berry-Phase-Linse, PBP-Linse, (730), beinhaltet;
wobei das geometrische Phasenelement vorzugsweise einen Stapel von zwei oder mehr PBP-Linsen (730, 740) beinhaltet;
wobei das geometrische Phasenelement ferner vorzugsweise ein PBP-Gitter (300) beinhaltet.

5. Optisches System (700) gemäß einem der Ansprüche 1 bis 4, das ferner eine traditionelle Linse beinhaltet, um dem geometrischen Phasenelement das Eingangslicht bereitzustellen.

6. Optisches System (700) gemäß einem der Ansprüche 1 bis 5, wobei das geometrische Phasenelement einen ersten Stapel beinhaltet, der eine erste PBP-Linse (730) mit einer ersten optischen Leistung und eine zweite PBP-Linse (740) mit einer zweiten optischen Leistung beinhaltet, wobei das optische System (700) ferner Folgendes beinhaltet:
einen Lichtleiter (1120), der konfiguriert ist, um dem ersten elliptischen Polarisator (720) Bildlicht bereitzustellen; und
einen zweiten Stapel PBP-Linsen, der eine dritte PBP-Linse mit einer optischen Leistung, die ein Konjugat der ersten optischen Leistung ist, und eine vierte PBP-Linse mit einer optischen Leistung, die ein Konjugat der zweiten optischen Leistung ist, beinhaltet.

7. Optisches System (700) gemäß Anspruch 6, wobei mindestens eine der ersten, zweiten, dritten und vierten PBP-Linse eine schaltbare PBP-Linse beinhaltet, um eine schaltbare Bildebene bereitzustellen;
das vorzugsweise ferner eine Vielzahl von elektrisch schaltbaren PBP-Flüssigkristallhalbwellenplatten (1215, 1235, 1245) beinhaltet, wobei jede der Vielzahl von elektrisch schaltbaren PBP-Flüssigkristallhalbwellenplatten (1215, 1235, 1245) neben einer anderen der ersten (730), zweiten (740), dritten und vierten PBP-Linse liegt, wobei die Vielzahl von elektrisch schaltbaren PBP-Flüssigkristallhalbwellenplatten (1215, 1235, 1245) und die erste (730), zweite (740), dritte und vierte PBP-Linse konfiguriert sind, um eine schaltbare Bildebene bereitzustellen;
das ferner vorzugsweise ferner eine Flüssigkristallanzeigevorrichtung (1110) beinhaltet, um dem Lichtleiter (1120) das Bildlicht bereitzustellen.

8. Optisches System (700) gemäß einem der Ansprüche 1 bis 7, wobei das optische System in einer Augmented-Reality-Head-Mounted-Vorrichtung (1505) eingeschlossen ist.

9. Optisches System (700) gemäß einem der Ansprüche 1 bis 8, das ferner Folgendes beinhaltet:
eine erste Viertelwellenplatte und eine zweite Viertelwellenplatte neben dem geometrischen Phasenelement; und
einen Linearpolarisator zwischen der ersten und der zweiten Viertelwellenplatte.

10. Eine Head-Mounted-Anzeige, HMD, (1505), die Folgendes beinhaltet:
eine elektronische Anzeige (1525), die konfiguriert ist, um Bildlicht zu emittieren;
einen ersten Stapel geometrischer Pancharatnam-Berry-Phase-Phasenelemente, PBP-Phasenelemente, die konfiguriert sind, um als Reaktion auf das Bildlicht einen ersten Lichtstrahl, der mit einer ersten Beugungsordnung assoziiert ist, und einen zweiten Lichtstrahl, der mit einer zweiten Beugungsordnung assoziiert ist, zu erzeugen; und
einen ersten elliptischen Polarisator (720), der konfiguriert ist, um eine Intensität des ersten Lichtstrahls zu reduzieren und eine Intensität des zweiten Lichtstrahls im Wesentlichen zu bewahren;
**dadurch gekennzeichnet, dass** die HMD (1505) ferner Folgendes beinhaltet:
einen zweiten elliptischen Polarisator (710); und
einen Depolarisator, der konfiguriert ist, um dem zweiten elliptischen Polarisator (710) unpolarisiertes Licht bereitzustellen.

11. HMD (1505) gemäß Anspruch 10, die ferner Folgendes beinhaltet:
einen zweiten Stapel geometrischer PBP-Phasenelemente, der konfiguriert ist, um Ausgangslicht zu erzeugen; und
einen Lichtleiter (1120) zwischen dem ersten und dem zweiten Stapel geometrischer PBP-Phasenelemente, wobei der Lichtleiter (1120) konfiguriert ist, um dem ersten Stapel geometrischer PBP-Phasenelemente das Bildlicht bereitzustellen und das Ausgangslicht, das durch den zweiten Stapel geometrischer PBP-Phasenelemente erzeugt wird, zu übertragen.

12. HMD (1505) gemäß Anspruch 10 oder 11, wobei der erste Stapel geometrischer PBP-Phasenelemente eine erste PBP-Linse (730) mit einer ersten optischen Leistung und eine zweite PBP-Linse (740) mit einer zweiten optischen Leistung umfasst und wobei der zweite Stapel geometrischer PBP-Phasenelemente eine dritte PBP-Linse mit einer optischen Leistung, die entgegengesetzt zu der ersten optischen Leistung ist, und eine vierte PBP-Linse mit einer optischen Leistung, die entgegengesetzt zu der zweiten optischen Leistung ist, umfasst;
die optional ferner elektrisch schaltbare PBP-Flüssigkristallhalbwellenplatten (1215, 1235, 1245) beinhaltet, die jeweils neben der ersten (730), zweiten (740), dritten und vierten PBP-Linse liegen, wobei die elektrisch schaltbaren PBP-Flüssigkristallhalbwellenplatten (1215, 1235, 1245) und die erste (730), zweite (740), dritte und vierte PBP-Linse konfiguriert sind, um eine schaltbare Bildebene bereitzustellen.

## Revendications

1. Un système optique (700), comprenant :
un élément de phase géométrique configuré pour produire un premier faisceau lumineux associé à un premier ordre de diffraction et un deuxième faisceau lumineux associé à un deuxième ordre de diffraction en réponse à la réception de lumière d'entrée ; et
un premier polariseur elliptique (720) configuré pour réduire une intensité du premier faisceau lumineux et préserver substantiellement une intensité du deuxième faisceau lumineux ;
**caractérisé en ce que** le système optique comprend en outre :
un deuxième polariseur elliptique (710) ; et
un dépolarisateur (770) configuré pour fournir de la lumière non polarisée au deuxième polariseur elliptique (710).

2. Le système optique (700) de la revendication 1, dans lequel le premier polariseur elliptique (720) comprend un polariseur circulaire ayant un premier sens et le deuxième polariseur elliptique (710) comprend un polariseur circulaire ayant un deuxième sens qui est opposé au premier sens.

3. Le système optique (700) de la revendication 1 ou de la revendication 2, dans lequel l'élément de phase géométrique est en outre configuré pour produire un troisième faisceau lumineux associé à un troisième ordre de diffraction, et le premier polariseur elliptique (720) est en outre configuré pour réduire une intensité du troisième faisceau lumineux.

4. Le système optique (700) de n'importe lesquelles des revendications 1 à 3, dans lequel l'élément de phase géométrique comprend une lentille de phase de Pancharatnam-Berry, PBP, (730) commutable ;
de préférence dans lequel l'élément de phase géométrique comprend un empilement de deux lentilles PBP (730, 740) ou plus ;
plus préférentiellement dans lequel l'élément de phase géométrique comprend un réseau PBP (300).

5. Le système optique (700) de n'importe lesquelles des revendications 1 à 4, comprenant en outre une lentille traditionnelle pour fournir la lumière d'entrée à l'élément de phase géométrique.

6. Le système optique (700) de n'importe lesquelles des revendications 1 à 5, dans lequel l'élément de phase géométrique comprend un premier empilement qui inclut une première lentille PBP (730) ayant une première puissance optique et une deuxième lentille PBP (740) ayant une deuxième puissance optique, le système optique (700) comprenant en outre :
un guide de lumière (1120) configuré pour fournir de la lumière d'image au premier polariseur elliptique (720) ; et
un deuxième empilement de lentilles PBP comprenant une troisième lentille PBP ayant une puissance optique qui est un conjugué de la première puissance optique et une quatrième lentille PBP ayant une puissance optique qui est un conjugué de la deuxième puissance optique.

7. Le système optique (700) de la revendication 6, dans lequel au moins une des première, deuxième, troisième, et quatrième lentilles PBP comprend une lentille PBP commutable pour fournir un plan image commutable ;
préférentiellement comprenant en outre une pluralité de lames demi-onde à cristaux liquides PBP électriquement commutables (1215, 1235, 1245), chaque lame demi-onde de la pluralité de lames demi-onde à cristaux liquides PBP électriquement commutables (1215, 1235, 1245) étant adjacente à une lentille PBP différente parmi les première (730), deuxième (740), troisième, et quatrième lentilles PBP, la pluralité de lames demi-onde à cristaux liquides PBP électriquement commutables (1215, 1235, 1245) et les première (730), deuxième (740), troisième, et quatrième lentilles PBP étant configurées pour fournir un plan image commutable ;
plus préférentiellement comprenant en outre un dispositif d'affichage à cristaux liquides (1110) pour fournir la lumière d'image au guide de lumière (1120).

8. Le système optique (700) de n'importe lesquelles des revendications 1 à 7, le système optique étant inclus dans un visiocasque de réalité augmentée (1505).

9. Le système optique (700) de n'importe lesquelles des revendications 1 à 8, comprenant en outre :
une première lame quart d'onde et une deuxième lame quart d'onde adjacentes à l'élément de phase géométrique ; et
un polariseur linéaire entre la première et la deuxième lame quart d'onde.

10. Un visiocasque, HMD, (1505) comprenant :
un écran électronique (1525) configuré pour émettre de la lumière d'image ;
un premier empilement d'éléments de phase géométrique de phase de Pancharatnam-Berry, PBP, configuré pour produire un premier faisceau lumineux associé à un premier ordre de diffraction et un deuxième faisceau lumineux associé à un deuxième ordre de diffraction en réponse à la lumière d'image ; et
un premier polariseur elliptique (720) configuré pour réduire une intensité du premier faisceau lumineux et préserver substantiellement une intensité du deuxième faisceau lumineux ;
**caractérisé en ce que** le HMD (1505) comprend en outre :
un deuxième polariseur elliptique (710) ; et
un dépolarisateur configuré pour fournir de la lumière non polarisée au deuxième polariseur elliptique (710).

11. Le HMD (1505) de la revendication 10, comprenant en outre :
un deuxième empilement d'éléments de phase géométrique PBP configuré pour produire de la lumière de sortie ; et
un guide de lumière (1120) entre le premier et le deuxième empilement d'éléments de phase géométrique PBP, le guide de lumière (1120) étant configuré pour fournir la lumière d'image au premier empilement d'éléments de phase géométrique PBP et pour transmettre la lumière de sortie produite par le deuxième empilement d'éléments de phase géométrique PBP.

12. Le HMD (1505) de la revendication 10 ou de la revendication 11, dans lequel le premier empilement d'éléments de phase géométrique PBP inclut une première lentille PBP (730) ayant une première puissance optique et une deuxième lentille PBP (740) ayant une deuxième puissance optique, et dans lequel le deuxième empilement d'éléments de phase géométrique PBP inclut une troisième lentille PBP ayant une puissance optique qui est opposée à la première puissance optique et une quatrième lentille PBP ayant une puissance optique qui est opposée à la deuxième puissance optique ; facultativement, comprenant en outre des lames demi-onde à cristaux liquides PBP électriquement commutables (1215, 1235, 1245) respectivement adjacentes aux première (730), deuxième (740), troisième, et quatrième lentilles PBP, les lames demi-onde à cristaux liquides PBP électriquement commutables (1215, 1235, 1245) et les première (730), deuxième (740), troisième, et quatrième lentilles PBP étant destinées à fournir un plan image commutable.
